# EUROPÄISCHE PATENTSCHRIFT

(11) **EP 3 899 631 B1**
(45) Veröffentlichungstag und Bekanntmachung des Hinweises auf die Patenterteilung: **20.08.2025**
(21) Anmeldenummer: 19845578.4
(22) Anmeldetag: 23.12.2019
(51) Int. Cl.: G02B 21/00, G02B 21/24, G02B 21/36

(54) **MIKROSKOP UND VERFAHREN ZUR MIKROSKOPISCHEN UNTERSUCHUNG GROSSER PROBEN**
MICROSCOPE AND METHOD FOR MICROSCOPIC EXAMINATION OF LARGE SAMPLES
MICROSCOPE ET PROCÉDÉ D'ANALYSE MICROSCOPIQUE DE GRANDS ÉCHANTILLONS

(30) Priorität: 21.12.2018 DE 102018222876
(43) Veröffentlichungstag der Anmeldung: 27.10.2021
(73) Patentinhaber: Leica Microsystems CMS GmbH, 35578 Wetzlar (DE)
(72) Erfinder: KNEBEL, Werner, 76709 Kronau (DE); FAHRBACH, Florian, 68167 Mannheim (DE)
(74) Vertreter: Grünecker Patent- und Rechtsanwälte PartG mbB
(86) Internationale Anmeldenummer: PCT/EP2019/086939
(87) Internationale Veröffentlichungsnummer: WO 2020/128095

(56) Entgegenhaltungen:
- WO-A1-2018/148309
- WO-A1-2019/170413
- DE-A1- 19 629 725
- DE-C1- 19 851 240
- JP-A- 2010 072 015

## Beschreibung

Die Erfindung betrifft ein Mikroskop und ein Verfahren zur Betrachtung eines Probenvolumens mittels eines Mikroskops.

Mikroskope der eingangs genannten Art, d.h. Lichtblattmikroskope und Konfokalmikroskope sind aus dem Stand der Technik, beispielsweise aus der WO 2018/148309 bekannt. Die Lösungen aus dem Stand der Technik sind hinsichtlich der möglichen Probengröße beschränkt und bieten daher eine geringe Flexibilität und/oder Genauigkeit bei der Untersuchung großer Proben.

Die DE 196 29 725 A1 beschreibt ein Doppelobjektivsystem für die "*Theta-Konfokal-Mikroskopie",* wobei sich die Strahlengänge der Beleuchtung und Detektion in einem Punkt schneiden. Auch in der JP 2010 072 015 A wird die Probe punktuell beleuchtet, insbesondere unter Nutzung eines Pinholes oder einer Nipkow-Scheibe. In der DE 198 51 240 C1 schneiden sich in Beleuchtungsrichtung elongierte Beleuchtungsvolumina mit einem Detektionsvolumen, wobei aus diesem Beleuchtungsvolumen emittierte Fluoreszenz durch einen konfokal angeordneten, punktförmig Detektor detektiert wird.

Folglich liegt der Erfindung die Aufgabe zugrunde, die bekannten Mikroskope des eingangs genannten Typs so zu verbessern, dass größere Proben untersucht werden können.

Diese Aufgabe wird durch ein Mikroskop gemäß Anspruch 1 gelöst.

Ferner wird das eingangs genannte Verfahren durch die vorliegende Erfindung dadurch verbessert, dass es die Verfahrensschritte gemäß Anspruch 15 umfasst.

Durch das erfindungsgemäße Vorsatzelement ist es möglich, eine Orientierung bzw. einen Abstand der ersten bzw. zweiten optischen Anordnung zum Probenvolumen zu modifizieren. Somit ist ein flexibler und kompakter Aufbau des optischen Moduls möglich. Ferner kann das Vorsatzelement den ersten oder den zweiten Strahlengang umlenken.

Die Einkoppelstelle für das Beleuchtungslicht kann an einem Gehäuse des optischen Moduls angeordnet sein. Die Einkoppelstelle könnte einen Durchgang für das frei verlaufende Beleuchtungslicht aufweisen. Alternativ könnte an dem Gehäuse des optischen Moduls ein Faserkoppler für eine Lichtleitfaser vorgesehen sein, mit der das Beleuchtungslicht zum Beleuchten eines Teils des Probenvolumens über den ersten Strahlengang und/oder den zweiten Strahlengang transportiert werden kann.

Weiterhin wird die eingangs genannte Aufgabe mit einem optischen Modul zur Beleuchtung eines Probenvolumens und zum Aufsammeln und Weiterleiten von Licht aus dem Probenvolumen gemäß Anspruch 14 gelöst.

Das erfindungsgemäße Mikroskop und das erfindungsgemäße Verfahren können durch die im Folgenden beschriebenen, jeweils für sich vorteilhaften Ausgestaltungen weiter verbessert werden. Technische Merkmale der Ausgestaltungen können dabei beliebig miteinander kombiniert oder weggelassen werden, sofern es in der spezifischen Ausgestaltung nicht auf den mit dem weggelassenen Merkmal erzielten technischen Effekt ankommt.

Das Mikroskop kann ein zum Lichtblattmikroskop umgebautes Konfokalmikroskop sein.

Es kann eine Lichtleitfaser vorgesehen sein, die ausgestaltet ist, das Beleuchtungslicht zur Einkoppelstelle zu transportieren.

Die optischen Anordnungen können mehrere einzelne Linsen bzw. ein Linsensystem umfassen und können bevorzugt als Mikroskopobjektiv ausgestaltet sein. Insbesondere die Ausgestaltung als Mikroskopobjektiv erlaubt einen einfachen Zugang und Austausch der gesamten optischen Anordnung. Die Strahlengänge werden jeweils durch die jeweilige optische Anordnung bzw. wird der Mikroskopstrahlengang durch optische Elemente des Mikroskops definiert.

Das Vorsatzelement befindet sich bevorzugt auf einer der Probe zugewandten Seite der jeweiligen optischen Anordnung und kann als dreidimensionaler, für das verwendete Licht transparenter Körper verstanden werden, durch welchen das Licht der Beleuchtung oder der Detektion transmittiert wird.

Bevorzugt kann Licht im ultravioletten, sichtbaren und nahinfraroten Spektralbereich verwendet werden. Beispielsweise kann die Beleuchtung mit ultraviolettem Licht erfolgen, welches bevorzugt eine Wellenlänge aufweist, die einer Anregungswellenlänge eines fluoreszierenden Stoffes entspricht. Somit kann vom fluoreszierenden Stoff ausgesandtes Fluoreszenzlicht im Vergleich zur Anregungswellenlänge langwelligen sichtbaren Spektralbereich oder im nahinfraroten Spektralbereich von der Probe emittiert und durch das optische Modul aufgesammelt und weitergeleitet werden. Das optische Modul kann im an der Aufnahmevorrichtung angebrachten Zustand relativ zum Mikroskopkorpus drehbar am Mikroskopkorpus gehalten sein.

In einer möglichen Ausgestaltung des erfindungsgemäßen Mikroskops kann das Mikroskop wenigstens zwei Betriebszustände aus der folgenden Liste von Betriebszuständen aufweisen:
- einen rastermikroskopischen Modus;
- einen nichtlinearer Beleuchtungsmodus;
- einen Konfokalmodus;
- einen Lichtfeldmodus; und
- einen Lichtblattmodus.

Da eine solche Ausgestaltung des Mikroskops somit eine Vielzahl mikroskopischer Methoden kombiniert ist es vielseitig anwendbar und eine Probe, die mit mehreren mikroskopischen Verfahren untersucht werden soll, kann in einem einzigen erfindungsgemäßen Mikroskop, insbesondere im Probenvolumen des Mikroskops verbleiben und muss nicht für eine weitere Untersuchung zu einem anderen Mikroskop bewegt werden.

Der nichtlineare Beleuchtungsmodus kann beispielsweise und nicht einschränkend ein Multiphotonenmodus, ein Second-Harmonic-Modus, ein Third-Harmonic-Modus oder ein CARS-Modus sein. Die Prinzipien dieser Mikroskopiemodi sind aus dem Stand der Technik bekannt und werden daher an dieser Stelle nicht näher erläutert.

Das erfindungsgemäße Mikroskop kann weiter dadurch verbessert werden, dass das Mikroskop eine Umschaltvorrichtung aufweist, mittels der das Mikroskop reversibel und wiederholt zumindest in einen ersten Mikroskopiemodus oder einen Lichtblattmodus schaltbar ist.

Der erste Mikroskopiemodus kann insbesondere der rastermikroskopische Modus oder der Konfokalmodus sein.

Somit muss weder die Probe aus dem Probenvolumen, noch das Mikroskop bewegt werden, um zwischen mehreren mikroskopischen Verfahren zu wechseln. Daher können durch den Flächensensor und/oder einen Punktdetektor aufgenommenen Bilder ohne aufwändige, während der Aufnahme der Bilder stattfindende oder nachgeschaltete Transformationen der Bilddaten miteinander korreliert werden. Die Probe kann somit an einem festen Ort verbleiben und mit unterschiedlichen Mikroskopieverfahren untersucht werden, so dass eine in den Bildausschnitten der unterschiedlichen mikroskopischen Verfahren positionierte Probe in den aufgenommenen Bilddaten stets an dem selben Ort abgebildet wird.

Ein entsprechendes erfindungsgemäßes Verfahren umfasst somit ferner den Verfahrensschritt des Umschaltens zwischen einem ersten Mikroskopiemodus und einem Lichtblattmodus, wobei im ersten Mikroskopiemodus das Probenvolumen entlang des ersten Strahlenganges beleuchtet wird und wobei im Lichtblattmodus das Probenvolumen entlang des zweiten Strahlenganges beleuchtet wird. Im Wesentlichen kann das Umschalten zwischen den Betriebszuständen somit einen Lichtpfad von Beleuchtungslicht betreffen. Bevorzugt wird das detektierte, von der Probe aus dem Probenvolumen ausgesandte Licht stets durch die erste optische Anordnung entlang des ersten optischen Strahlenganges aufgesammelt und weitergeleitet.

Diese Ausgestaltung des erfindungsgemäßen Mikroskops erlaubt es somit, wiederholt die Betriebszustände des Mikroskops zu wechseln, ohne dass eine erneute Justage des Mikroskops und/oder eine Änderung der Lage der Probe notwendig ist. Das Umschalten zwischen den Betriebszuständen erfordert somit keinen Mehraufwand und kann nahtlos in bestehende Arbeitsabläufe bei der mikroskopischen Untersuchung von Proben eingefügt werden.

In einer weiteren vorteilhaften Ausgestaltung des erfindungsgemäßen Mikroskops kann der optische Strahlengangselektor ein wellenlängenselektives optisches Element sein. Ein mögliches wellenlängenselektives optisches Element ist beispielsweise und nicht einschränkend ein dichroitischer Spiegel. Derartige dichroitische Spiegel sind aus dem Stand der Technik bekannt und werden hier nicht näher erläutert.

Ferner ist es auch denkbar, dass der erfindungsgemäße optische Strahlengangselektor auf anderen optischen, wellenlängenselektiven Prinzipien basiert, beispielsweise Beugung oder Brechung.

Bevorzugt kann das wellenlängenselektive optische Element unter einem Einfallswinkel von ca. 45° verwendet werden. Allerdings sind auch von dieser Konfiguration abweichende Einfallswinkel im Bereich von 10° bis 80° möglich.

Die zweite optische Anordnung ist als Lichtblattmodul zur Erzeugung eines das Probenvolumen durchquerenden Lichtblattes ausgestaltet. Dies hat den Vorteil, dass ein solches Lichtblattmodul auf einfache Weise ausgewechselt bzw. ersetzt werden kann. Folglich kann ein Lichtblatt mit unterschiedlichen Eigenschaften in der Probe dadurch generiert werden, dass ein Lichtblattmodul mit anderen Eigenschaften in das optische Modul eingesetzt wird. Auch ein Lichtblattmodul kann als Mikroskopobjektiv ausgestaltet sein. Dies hat den Vorteil, dass ein solches Lichtblattmodul auf einfache Art und Weise ein Mikroskopobjektiv ersetzen kann.

Bevorzugt weist das Lichtblattmodul eine aus der Mikroskopie bekannte Befestigungsanordnung in Form eines (bevorzugt genormten) Bajonettverschlusses, Gewindes oder einer Schwalbenschwanzführung auf.

Bevorzugt ist das Vorsatzelement am Lichtblattmodul angeordnet.

Das im Probenvolumen erzeugte Lichtblatt kann durch ein lediglich entlang einer Richtung fokussierendes optisches Element, beispielsweise eine Zylinderlinse, erzeugt werden. Ferner ist es möglich, einen fokussierten Strahl durch eine Ablenkeinheit schnell im Probenvolumen zu bewegen. Sofern diese Bewegung schneller ist als eine Abtastrate der Detektion, ist ein solches Abrastem des Probenvolumens nicht mehr als Bewegung erkennbar und man spricht von einem virtuellen Lichtblatt.

In einer weiteren vorteilhaften Ausgestaltung des erfindungsgemäßen Mikroskops kann das wellenlängenselektive optische Element mindestens eine spektrale Filterkante aufweisen, welche einen ersten spektralen Bereich von einem zweiten spektralen Bereich trennt. Das wellenlängenselektive optische Element kann hierbei für den ersten spektralen Bereich und für den zweiten spektralen Bereich unterschiedliche Transmission- und Reflexionseigenschaften aufweisen. Im Lichtblattmodus kann die spektrale Filterkante spektral zwischen einer ersten Wellenlänge von in das Probenvolumen eingestrahltem Licht und einer zweiten Wellenlänge von aus dem Probenvolumen aufgesammelten Licht liegen, wohingegen im ersten Mikroskopiemodus die erste Wellenlänge und die zweite Wellenlänge des Lichts gemeinsam im ersten spektralen Bereich oder im zweiten spektralen Bereich liegen können.

Folglich kann im Lichtblattmodus das eingestrahlte Licht der ersten Wellenlänge durch das wellenlängenselektive optische Element hindurchtransmittiert werden, wohingegen das von der Probe ausgestrahlte Licht der zweiten Wellenlänge vom wellenlängenselektiven optischen Element reflektiert wird.

Dahingegen können im ersten Mikroskopiemodus beide Wellenlängen vom wellenlängenselektiven optischen Element transmittiert oder reflektiert werden.

Ferner kann das wellenlängenselektive optische Element auch zwei oder mehr Filterkanten aufweisen. So kann das wellenlängenselektive optische Element beispielsweise ein transmittives Bandpassfilter und ein reflektives Bandstoppfilter umfassen, wobei Licht von drei aneinander angrenzenden spektralen Bereichen alternierend vom wellenlängenselektiven optischen Element transmittiert oder reflektiert wird. Im Hinblick auf die oben genannte spektrale Lage der Wellenlängen bezüglich der Filterkante ist bei dieser Ausgestaltung notwendig, beide Filterkanten zu betrachten. So können beispielsweise die erste und die zweite Wellenlänge auf einer gemeinsamen Seite einer ersten Filterkante angeordnet sein, jedoch eine zweite Filterkante zwischen den Wellenlängen angeordnet sein. In einem solchen Fall kann sich das Mikroskop im Lichtblattmodus befinden, da sich die erste Wellenlänge in einem spektralen Bereich hoher Reflexion und sich die zweite Wellenlänge in einem Bereich hoher Transmission befindet.

Des Weiteren besteht die Möglichkeit, dass die beiden Wellenlängen das transmittierende bzw. reflektierende Band des Bandpass- bzw. Bandstoppfilters einschließen. In einem solchen Fall kann sich das Mikroskop im ersten Mikroskopiemodus befinden.

Wird von alternierend reflektiven und transmittiven spektralen Bereichen ausgegangen, so können sich zwischen den beiden Wellenlängen auch mehr als zwei Filterkanten befinden. Ist die Anzahl der Filterkanten gerade, so befindet sich das Mikroskop im ersten Mikroskopiemodus, ist die Anzahl dagegen ungerade, so werden die beiden Wellenlängen vom wellenlängenselektiven optischen Element räumlich voneinander getrennt, d.h. das Mikroskop befindet sich im Lichtblattmodus.

Wird von den beiden Wellenlängen eine (oder eine ungerade Anzahl von) Filterkante(n) eingeschlossen so kann in Abhängigkeit von der Transmission- bzw. Reflexionscharakteristik des Filters entweder die kürzere Wellenlänge oder die längere Wellenlänge reflektiert und entsprechend die längere Wellenlänge oder die kürzere Wellenlänge transmittiert werden.

Das erfindungsgemäße Mikroskop kann weiter dadurch verbessert werden, indem die Umschaltvorrichtung wenigstens ein Element aus der Liste der Elemente, umfassend
- eine wellenlängenveränderliche Lichtquelle;
- eine Lichtquelle mit wenigstens zwei unabhängig voneinander schaltbaren, sich unterscheidenden Emissionswellenlängen;
- ein wellenlängenveränderndes optisches Element zur Variation der Wellenlänge des eingestrahlten Lichts;
- ein optisches Verzögerungselement zur Variation der Polarisation des eingestrahlten Lichts; und
- ein Strahlengangselektor-Wechselmodul zum wechselweisen oder unabhängigen Einbringen wenigstens zweier Strahlengangselektoren in den Mikroskopstrahlengang, umfasst.

In einer entsprechenden Ausgestaltung des erfindungsgemäßen Verfahrens kann das Umschalten zwischen einem ersten Mikroskopiemodus und einem Lichtblattmodus wenigstens einen Verfahrensschritt aus der Liste der folgenden Verfahrensschritte umfassen:
- Auswechseln eines optischen Strahlengangselektors, der den ersten Strahlengang und/oder den zweiten Strahlengang mit einem Mikroskopstrahlengang zusammenführt;
- Verändern der Wellenlänge von eingestrahltem Beleuchtungslicht mittels einer wellenlängenveränderlichen Lichtquelle und/oder einem wellenlängenverändernden optischen Element; und
- Variieren der Polarisation des eingestrahlten Beleuchtungslichts mittels eines optischen Verzögerungselements.

Die Lichtquelle mit den unabhängig voneinander schaltbaren Emissionswellenlängen kann beispielsweise ein Laser mit schaltbaren Laserlinien sein. Alternativ kann diese Ausgestaltung der Lichtquelle als ein Modul ausgestaltet sein, welches mehrere Laser umfassen kann. Bevorzugt kann eine Wellenlänge fest einstellbar sein und zwei weitere Wellenlängen wahlweise, das heißt beispielsweise alternierend zuschaltbar sein. Rein beispielhaft und nicht einschränkend kann ein Laser (zum Beispiel bei 488 nm) ausgeschaltet und ein anderer Laser (zum Beispiel bei 561 nm) dafür eingeschaltet werden. Beliebige andere Kombinationen von Emissionswellenlängen der im Stand der Technik verfügbaren Laser sind denkbar.

Somit kann gemäß einem ersten generellen Ansatz eine relative spektrale Lage der wenigstens zwei Wellenlängen des in das Probenvolumen eingestrahlten bzw. aus diesem aufgesammelten Lichts bezüglich der wenigstens einen Filterkante verändert werden. Insbesondere kann die relative spektrale Lage derart verändert werden, dass sich beide Wellenlängen auf einer Seite der Filterkante befinden bzw. dass beide Wellenlängen die Filterkante spektral einschließen. Die obigen Relationen in Hinblick auf die spektrale Lage ist im Hinblick auf die Wellenlänge des Lichts bzw. die Wellenlänge, bei welcher die Filterkante liegt zu verstehen. Schließen beispielsweise eine erste Wellenlänge und eine zweite Wellenlänge die Filterkante ein, so bedeutet dies, dass die Wellenlänge, an welcher die Filterkante liegt größer als die erste Wellenlänge und kleiner als die zweite Wellenlänge ist ohne Beschränkung der Allgemeinheit können die Wellenlängen vertauscht werden.

Bei oben genannten ersten Ansatz besteht nunmehr die Möglichkeit, wenigstens eine der beiden Wellenlängen zu variieren und die spektrale Lage der Filterkante beizubehalten. Dies kann rein beispielhaft mittels der wellenlängenveränderlichen Lichtquelle erfolgen, beispielsweise durch spektrale Selektion des von einem Laser, beispielsweise einem Weißlichtlaser, ausgegebenem Lichtes. Hier können mittels geeigneter Vorrichtungen die Wellenlängen des Weißlichtlasers bzw. eines breitbandigen Lasers selektiert werden. Beispielsweise und nicht einschränkend ist eine solche Selektion durch akustooptische Vorrichtungen, wie akustooptische Transmissionsfilter (acoustooptic transmission filter: AOTF) bzw. akustooptische Strahlteiler (acoustooptic beamsplitter: AOBS) durchführbar.

Wird folglich die Wellenlänge des Beleuchtungslichts variiert, so kann diese über die spektrale Filterkante hinaus verschoben werden, wobei sich für die variierte Wellenlänge die Transmission- bzw. Reflexionseigenschaft des Strahlengangsektors verändert.

Ebenso ist es denkbar, andere breitbandige Laser zur Beleuchtung zu verwenden, wobei bei diesen Lasern die Wellenlänge des ausgegebenen Lichts einstellbar ist. Auch die Verwendung von wenigstens einem Diodenlaser ist denkbar. Diodenlaser können beispielsweise durch eine Variation des Betriebsstromes und/oder der Betriebstemperatur in gewissen Grenzen in der von diesen ausgegebenen Wellenlänge durchgestimmt, d.h. variiert werden. In einer alternativen Ausgestaltung kann beispielsweise ein Modul verwendet werden, welches mehrere schaltbare Laser, beispielsweise Diodenlaser umfasst.

Bei einem zweiten Ansatz wird die relative Lage der mindestens zwei Wellenlängen bezüglich der Filterkante ebenso variiert, jedoch bleiben hier die Wellenlängen konstant und es wird die spektrale Lage der Filterkante variiert, d.h. die Wellenlänge, bei welcher die Filterkante liegt wird verändert. Dies kann durch das Strahlengangselektor-Wechselmodul dadurch erfolgen, dass ein Strahlengangselektor durch einen weiteren Strahlengangselektor ersetzt wird bzw. dass alternativ der weitere Strahlengangselektor zusätzlich zum Strahlengangselektor in den Mikroskopstrahlengang eingebracht wird.

Alternativ oder zusätzlich kann ein dichroitisches Verlaufsfilter verwendet werden. Dieses ist dadurch gekennzeichnet, dass die spektrale Lage der Filterkante abhängig von der Position im Verlaufsfilter ist.

Zwei in den Mikroskopstrahlengang eingebrachte Strahlengangselektoren können auch erst in der Kombination ihrer jeweiligen Transmission- und Reflexionseigenschaften ein Umschalten des Betriebszustandes des Mikroskops ermöglichen, beispielsweise beide Wellenlängen reflektieren.

Im Folgenden soll ein nicht einschränkendes Beispiel dargestellt werden. Geht man von zwei Wellenlängen aus, wobei die zweite Wellenlänge größer als die erste Wellenlänge und der Strahlengangselektor als wellenlängenselektives Element mit einer Filterkante ausgestattet ist, die sich zwischen den zwei Wellenlängne befindet, wobei die erste Wellenlänge sich in einem ersten spektralen Bereich des wellenlängenselektiven Elements und die zweite Wellenlänge sich in einem zweiten spektralen Bereich des wellenlängenselektiven Elements befinden. Im ersten Spektralbereich kann eine (idealerweise angenommene) Transmission von 1 vorliegen, wohingegen im zweiten spektralen Bereich eine (ebenso idealerweise angenommene) Reflexion von 1 und eine Transmission von 0 vorliegt.

Bei dieser relativen Anordnung der Wellenlängen und der Filterkante befindet sich das Mikroskop im Lichtblattmodus. Nun kann ein zweiter Strahlengangselektor in den Mikroskopstrahlengang eingebracht werden, der einer Filterkante aufweist, die bei einer Wellenlänge liegt, die größer als die zweite Wellenlänge ist, wobei beide Wellenlängen im ersten spektralen Bereich des weiteren Strahlengangselektors liegen und beide reflektiert werden. Dies entspricht dem ersten Mikroskopiemodus. Das Mikroskop kann ein oder mehrere Filterräder bereitstellen, die einen solchen Wechsel zwischen den Strahlengangselektoren ermöglicht bzw. ermöglichen. Ein Filterrad ist eine mögliche Ausgestaltung einer Umschaltvorrichtung.

Ebenso ist es denkbar, dass in diesem Beispiel der weitere Strahlengangselektor zusätzlich zum bereits im Mikroskopstrahlengang befindlichen Strahlengangselektor in den Mikroskopstrahlengang eingebracht werden kann. In diesem Fall kann der weitere Strahlengangselektor beispielsweise ein Kurzpassfilter sein, dessen Filterkante ebenso zwischen den beiden Wellenlängen liegt. Die Kombination des Strahlengangselektors (Langpassfilter) mit dem weiteren Strahlengangselektor (Kurzpassfilter) schaltet das Mikroskop ebenso vom Lichtblattmodus in den ersten Mikroskopiemodus.

In einer weiteren vorteilhaften Ausgestaltung kann das Mikroskop mindestens eine Lichtquelle umfassen, die Licht in mindestens zwei unterschiedlichen Wellenlängenbereichen emittiert, beispielsweise ein Lasermodul mit mindestens zwei Dioden-Lasern, wobei Licht der mindestens einen Lichtquelle der mindestens zwei unterschiedlichen Wellenlängenbereiche unabhängig voneinander in den Mikroskopstrahlengang einkoppelbar ist, wobei wenigstens zwei der unterschiedlichen Wellenlängenbereiche der Lichtquelle in unterschiedlichen spektralen Bereichen des wellenlängenselektiven optischen Elements liegen.

Die zwei unterschiedlichen Wellenlängenbereiche können somit von einer einzigen Lichtquelle oder aber von mehreren Lichtquellen generiert werden.

Durch die geeignete Wahl des Strahlengangselektors kann sehr schnell zwischen den beiden Strahlengängen 1 und 2 ohne mechanische Bewegungen eines Teiles gewechselt werden, wenn die Filterkante des Selektors zwischen den beiden Wellenlängen liegt. Dies kann zur Photomanipulation benutzt werden. Der Wechsel der Wellenlängen kann innerhalb von Mikrosekunden (z.B. durch Verwendung eines AOTF zur Schaltung der Wellenlängen) erfolgen. Eine gezielte Beleuchtung mit einer bestimmten Wellenlänge in einem bestimmten Probenbereich kann bei Verwendung eines Galvanometer-Scanners im Millisekundenbereich durch eine einfachen Offset der Stellung des Galvo-Spiegels erfolgen.

Wird eine akustooptische Verstelleinheit zur Strahlablenkung verwendet kann die Positionierung in Mikrosekunden erfolgen. Dies ist besonders vorteilhaft bei schnellen optogenetisch stimulierbaren Prozessen in lebenden Organismen sowie bei Manipulationen, die durch Licht geschaltet werden können.

Bevorzugt kann eine solche Lichtquelle, die unterschiedliche Wellenlängenbereiche bzw. darin liegende unterschiedliche Wellenlängen emittiert der zuvor beschriebenen Variation der Wellenlänge kombiniert werden.

Wird der Strahlengangselektor im optischen Modul ausgewechselt, so kann bevorzugt in einer weiteren Ebene des Mikroskops, beispielsweise in einer Detektoreinkoppelebene ebenso ein optisches Filtersystem zum Wechseln von Filtern vorgesehen sein, wobei die Filter entsprechend der gewünschten Beleuchtungs- und Detektionswellenlängen und dem Betriebszustand gewählt werden. Die Detektoreinkoppelebene ist jene Ebene, an die die Detektoreinheit für Punkt- und Flächendetektion sowie die wenigstens eine Lichtquelle ankoppelbar sind. Hier können ebenso Filterräder oder aus dem Stand der Technik bekannt Filterwechselsysteme als Umschaltvorrichtung verwendet werden. Das Filterwechselsystem in dieser Ebene kann einen Filter entsprechend der Einstellung des Strahlengangselektor-Wechselmodul besonders bevorzugt automatisch und in Abhängigkeit vom Strahlengangselektor-Wechselmodul wählen und in den Mikroskopstrahlengang einbringen. Mit anderen Worten initiiert ein Wechsel des Strahlengangselektors einen Wechsel eines Filters des Filterwechselssystems der Detektoreinkoppelebene.

Ein Mittel zum Umschalten des Betriebszustandes des Mikroskops kann somit im Mikroskop selbst bereitgestellt sein, d.h. beispielsweise im Mikroskopkorpus. Dieses Mittel kann in einem engen Zusammenspiel mit dem Strahlengangselektor- Wechselmodul arbeiten.

Im erfindungsgemäßen Mikroskop wird vorzugsweise der Flächendetektor als Detektor für den Lichtblattmodus verwendet. Ist der erste Mikroskopiemodus der Konfokalmodus, so kann für diesen bevorzugt ein Punktdetektor verwendet werden. Allerdings sind andere Kombinationen der Detektoren denkbar, zum Beispiel die Verwendung des Flächendetektors auch für den Konfokalmodus. Die Detektoren können auch in Kombination miteinander verwendet werden.

In einer weiteren Ausgestaltung kann das erfindungsgemäße Verfahren dadurch verbessert werden, dass
- im Verfahren im Lichtblattmodus ein interessierender Bereich des Probenvolumens identifiziert wird;
- nach dem Umschalten in den ersten Mikroskopiemodus der identifizierte interessierende Bereich mittels eines rasternden mikroskopischen Verfahrens mit, im Vergleich zum Lichtblattmodus, höherer Auflösung untersucht wird; und dass
- durch den Flächensensor oder einen Punktdetektor erzeugte Bilddaten des Lichtblattmodus und des ersten Mikroskopiemodus, die eine vom Probenvolumen ausgesandte Lichtverteilung repräsentieren, fusioniert werden und/oder gemeinsam dargestellt werden.

Das Umschalten des Betriebszustandes des Mikroskops kann mittels einem der oben beschriebenen Verfahrensschritte erfolgen.

Diese Ausgestaltung des Verfahrens hat den Vorteil, dass in einer Probe sehr schnell ein Bild aufgenommen werden kann, welches einen Überblick über die Probe gibt. In diesen können (in gewollter Weise) Details nicht aufgelöst sein. In der Aufnahme des Lichtblattmodus des Mikroskops kann der interessierende Bereich identifiziert werden. Dieser wird auch "region of interest" (kurz: ROI) genannt. Der ROI kann vom Benutzer in geeigneter Weise auf einem Bildschirm durch eine Handgestensteuerung einen Mund- oder Fußschalter ausgewählt werden. Daraufhin kann der Betriebszustand des Mikroskops umgeschaltet werden, wobei das bevorzugt rasterndes Verfahren lediglich eine Aufnahme des ROI durchführt, d.h. nicht den gesamten im Lichtblattmodus aufgenommenen Bereich abtastet/rastert.

Diese Ausgestaltung des Verfahrens kann besonders effizient sein, da beide Betriebszustände in nur einem Mikroskop möglich sind, d.h. beide Messungen/Aufnahmen ohne Wechsel des Mikroskops bzw. der Probe möglich sind. Ferner wird durch die Selektion/Auswahl des ROI vermieden, dass unnötigerweise große Datenmengen gespeichert werden müssen die Bereiche betreffen, die für den Nutzer von geringerem oder keinem Interesse für die laufende Untersuchung sein können.

Insbesondere können die im Lichtblattmodus und ersten Mikroskopiemodus erzeugten Bilddaten fusioniert werden. Hierunter ist zu verstehen, dass die erzeugten Bilddaten insbesondere im Hinblick auf die räumliche Lage in der Probe miteinander korreliert sind, sodass beispielsweise bei einer Vergrößerung des ROI eben dieser mit der höheren Auflösung in diesem Bereich dargestellt werden kann, wohingegen in Bereichen außerhalb des ROI diese Auflösung nicht gewährleistet sein kann (da die Aufnahme im Lichtblattmodus eine geringere Auflösung bieten kann.

In einer weiteren Ausgestaltung des erfindungsgemäßen Verfahrens kann Licht, welches sich vom Beleuchtungslicht unterscheidet auf oder in einer im Probenvolumen angeordneten Probe eingestrahlt werden.

Dieses zusätzlich eingestrahlte Licht kann Manipulationslicht genannt werden. Entsprechend der Wellenlänge des Manipulationslichts kann dieses somit vom Strahlengangselektor entweder reflektiert und entlang des ersten Strahlengangs umgelenkt oder transmittiert und entlang des zweiten Strahlengangs durchgelassen werden.

Wird das Manipulationslicht durch den Strahlengangselektor transmittiert, so kann dieses großflächig, d.h. im Wesentlichen in Form eines Lichtblattes die Probe bestrahlen aufgrund der unterschiedlichen Wellenlängen können sich die durch das Beleuchtungslicht und das Manipulationslicht ausgebildeten Lichtblättern geringfügig in ihrer Größe unterscheiden.

Wird das Manipulationslicht dagegen reflektiert, so kann ein punktförmiges Bestrahlen der Probe möglich sein. Die punktförmige Bestrahlung kann dann als Linie oder Fläche ausgeführt werden. Dennoch ist es denkbar, dass bei geeigneter Einkopplung des Manipulationslichts (divergent bzw. konvergent) auch eine flächige Bestrahlung der Probe entlang des ersten Strahlenganges möglich ist.

Die Bestrahlung der Probe kann resonant (bei einem Absorptionsmaximum der Probe) oder nichtresonant (außerhalb des Absorptionsmaximums der Probe) erfolgen, wobei im ersten Fall vom Manipulieren und im zweiten Fall vom Anregen der Probe gesprochen werden kann.

Insbesondere kann die Probe auch mit nahinfrarotem Licht bestrahlt werden, um eine Multiphotonenanregung in der Probe zu erzeugen. Gleichzeitig kann eine Aufnahme mittels Lichtblatt erfolgen.

Bei Bestrahlung mit nahinfrarotem Licht kann dieses am wellenlängenselektiven optischen Element zur ersten optischen Anordnung reflektiert werden. Kurzwelligeres Fluoreszenzlicht (zum Beispiel grün) kann in der Probe generiert und von der ersten optischen Anordnung aufgesammelt werden und ferner ebenso am wellenlängenselektiven Element von der ersten optischen Anordnung ausgehend in Richtung des Mikroskopkorpus reflektiert werden. Gleichzeitig kann rotes oder blaues Licht (Licht mit Wellenlängen, welche als rot bzw. blau wahrgenommen werden bzw. definiert sind) durch das wellenlängenselektive optische Element in Richtung der zweiten optischen Anordnung transmittiert werden und ein Lichtblatt ausbilden (statisches oder virtuelles Lichtblatt). Wird das dritte wellenlängenselektive optische Element geeignet gewählt, so kann dieses das nahinfraroten Licht, das blaue oder rote Licht reflektieren, jedoch den spektralen Bereich der Fluoreszenz (grün) in Richtung einer Kamera transmittieren.

Das nahinfraroten Licht kann entweder zur Erzeugung von Multiphotonen- Datensätzen mit einer Punktdetektoreinheit oder Non-Descanning Detektoren unmittelbar über der ersten optischen Anordnung (d.h. dem weiteren wellenlängenselektiven optischen Element nachgeschaltet) genutzt werden. Ein Vorteil eines solchen Aufbaus liegt darin, dass ohne jegliche mechanische Bewegung eine Umschaltung möglich ist und somit schnell zwischen einem manipulierendem Verfahren und den Lichtblattmodus gewechselt werden kann.

Das Manipulationslicht kann über eine auf Licht- Schnittstelle mittels eines geeigneten weiteren wellenlängenselektiven Elements in das Mikroskop eingekoppelt werden. Im konfokal Modus des Mikroskops kann ein solches weiteres wellenlängenselektives Element bevorzugt aus dem Strahlengang entfernt bzw. durch ein (besonders bevorzugt entspiegeltes) Glassubstrat ersetzt werden, welches den Strahlversatz des weiteren wellenlängenselektiven Elements nachbildet, ohne weiteren (spektralen) Einfluss auf den Strahlenverlauf zu haben.

Im erfindungsgemäßen Mikroskop kann eine Multiphoton-Lichtblatt-Beleuchtung und gleichzeitig eine Beleuchtung mit sichtbarem Licht zur Stimulierung eines biologischen Ereignisses durchgeführt werden. Hierzu kann über das weitere wellenlängenselektive optische Element Beleuchtungslicht im sichtbaren Spektralbereich (beispielsweise kleiner 500 nm) in den Mikroskopstrahlengang eingekoppelt werden. Über eine Leuchtfeldblende in einer dem weiteren wellenlängenselektiven optischen Element zugeordneten Achse kann es möglich sein eine Beleuchtungsfläche einzustellen.

Das Mikroskop kann eine optische Schnittstelle zum Anschluss einer Konfokaleinheit aufweisen. Diese kann durch ein drittes wellenlängenselektives optisches Element gebildet sein, welches Licht entweder in Richtung der Konfokaleinheit oder in Richtung einer Kamera leiten kann. Durch geeignete Wahl des dritten wellenlängenselektiven optischen Element, sowie des wellenlängenselektiven Elements im optischen Modul ist es somit möglich die Probe über die erste optische Anordnung konfokal punktweise abzutasten und das Licht entweder vollständig mit der Kamera zu erfassen; vollständig mit einer Punktdetektor Einheit zu erfassen; oder jeweils teilweise mit der Kamera und dem Punktdetektor zu erfassen (mit einem partiellen Reflektor oder einem chromatischen Filter in der optischen Schnittstelle). Das wellenlängenselektive optische Element des optischen Moduls kann als Spiegel ausgestaltet sein.

Mögliche Manipulations-Methoden sind Laserablation, Optogenetik oder Fotokonversion.

Das erfindungsgemäße Mikroskop sowie die erfindungsgemäßen Verfahren erlauben es somit eine Probe mit verschiedenen Mikroskopie- Verfahren zu untersuchen. Hierbei kann anstelle eines einzelnen, wie beispielsweise im Stand der Technik verwendeten Objektivs das erfindungsgemäße Modul am Mikroskop verbaut und verwendet werden.

Allein durch die Verwendung geeigneter Strahlengangselektoren und dem in einigen Ausgestaltungen beschriebenem Wechseln des Strahlengangselektors können somit diverse Mikroskopie-Verfahren miteinander kombiniert bzw. simultan ausgeführt werden. Die Untersuchungen finden im gleichen Probenbereich statt und erfordern keinen Wechsel des Mikroskops bzw. keine Bewegung der Probe.

Mögliche weitere Mikroskopie-Verfahren sind neben der bereits erwähnten konfokalen Rasterscanmikroskopie FLIM, FRET, Multiphotonenmikroskopie oder Lokalisationsmikroskopie (PALM / STORM und artverwandte Verfahren).

Insbesondere kann durch das erfindungsgemäße optische Modul ein handelsübliches, bevorzugt aufrechtes konfokales Rasterscan-Mikroskop zu einem lichtblattfähigen Mikroskop umgebaut werden.

Ein solcher Umbau spart zum einen den für ein weiteres Mikroskop notwendigen Platz ein und kann zudem kostengünstiger sein als ein komplettes Lichtblattmikroskop. Insbesondere können die Kosten für das für den notwendigen Umbau erforderliche optische Modul in der Größenordnung der Kosten eines neuen Objektivs liegen.

Durch die Verwendung des erfindungsgemäßen optischen Moduls kann somit ein bereits vorhandenes konfokales Mikroskop zu einem vielseitigen Mikroskop mit einer Vielzahl von Betriebszuständen bzw. Betriebsmodi umgebaut werden.

In einer weiteren Ausgestaltung des erfindungsgemäßen Mikroskops kann der Mikroskopstrahlengang zu einer senkrecht auf der hinteren Brennebene der ersten und/oder zweiten optischen Anordnung stehenden Normalen verkippt in das optische Modul einspeisbar sein, wobei die zweite optische Anordnung und/oder das Vorsatzelement in Abhängigkeit der Verkippung des Mikroskopstrahlenganges zur Normalen der hinteren Brennebene der zweiten optischen Anordnung verkippbar sein können.

Mit dieser Ausgestaltung des erfindungsgemäßen Mikroskops kann sichergestellt werden, dass Licht, welches im Wesentlichen durch den Strahlengangselektor transmittiert wird, d.h. entlang des zweiten optischen Strahlenganges verläuft, nicht über den ersten optischen Strahlengang in das Bildfeld (Field of View) der Kamera (2D Detektor) gelangt.

Werden als Strahlengangselektoren wellenlängenselektive Elemente in Form von dichroitischen Strahlteilern bzw. dichroitischen Spiegeln verwendet, so können diese durch ihre Beschichtungen eine Unterdrückung ungewollter Reflexionen lediglich zu 99,0% bis 99,9% gewährleisten. D.h., dass 0,1% bis 1,0% des eingestrahlten Beleuchtungslichts, welches entlang des zweiten Strahlenganges propagieren soll, in den ersten Strahlengang reflektiert werden kann. Diese ungewollt in Richtung der ersten optischen Anordnung gelenkte Licht, d.h. ein Anteil des Beleuchtungslichts, wird durch diese in die Probe fokussiert und kann beispielsweise in der Probe Fluoreszenz erzeugen, die mittels des Lichtblattes angeregte Fluoreszenz überlagern und ungewünschte Artefakte liefern.

Das Beleuchtungslicht wird daher derart verkippt in das optische Modul eingestrahlten das der am Strahlengangselektor reflektierte Anteil des Beleuchtungslichts durch die erste optische Anordnung nicht innerhalb eines Bildfeldes in der Probe fokussiert wird. Mit anderen Worten liegt dieser Anteil außerhalb eines Akzeptanzwinkels der ersten optischen Anordnung und wird somit nicht durch diese abgebildet.

Die Verkippung des Mikroskopstrahlenganges beeinflusst jedoch auch den zweiten Strahlengang, sodass bevorzugt die zweite optische Anordnung und/oder das Vorsatzelement der Art verkippt werden können, dass sich die erste optische Achse und die zweite optische Achse im Probenvolumen wieder im Wesentlichen senkrecht zueinander schneiden.

In einer weiteren Ausgestaltung des erfindungsgemäßen Mikroskops kann ein Stoppfilter zum Abschwächen oder Blockieren eines reflektierten Anteils des zweiten spektralen Bereichs (d.h. des Beleuchtungslichts), der vom wellenlängenselektiven optischen Element im Wesentlichen zur zweiten optischen Anordnung transmittiert wird und/oder eine weitere optische Anordnung zur Verlagerung der hinteren Brennebene der ersten optischen Anordnung im ersten Strahlengang vorgesehen sein.

Ein Stoppfilter kann eine einfache Alternative zu oben genannter Verkippung des Mikroskopstrahlenganges sein. Der Stoppfilter kann das Beleuchtungslicht idealerweise komplett blockieren oder aber zumindest derart abschwächen, dass der ohnehin nur 0,1% bis 1,0% betragende Anteil des Beleuchtungslichts nach der Abschwächung keine detektierbare Fluoreszenz erzeugen kann.

Um einer möglichen Vignettierung vorzubeugen, kann die weitere optische Anordnung zur Verlagerung der hinteren Brennebene der ersten optischen Anordnung verwendet werden. Diese, bevorzugt afokale Optik kann eine Ebene einer vorgesehenen Kippachse in die tatsächliche hinteren Brennebene der ersten optischen Anordnung verlagern.

Mit dieser Ausgestaltung kann verhindert werden, dass die Verkippung des Strahls nicht um eine in der hinteren Brennebene der optischen Anordnung liegende Ebene stattfindet. Wäre dies der Fall, so können am Rand des Bildfeldes liegende Punkte nicht vollständig abgebildet werden und es würde zu Abschattungen (Vignettierung) kommen.

Alternativ zur Verwendung der afokalen Optik kann eine aus dem Stand der Technik bekannte Scanner-Konfiguration verwendet werden, welche zwei Spiegel aufweist, die um parallele Drehachsen verkippbar sind, jedoch um unterschiedliche Winkel verkippt werden. Aus dem Abstand der Spiegel und den beiden Auslenkwinkeln der Spiegel kann in einem solchen Fall die Position der Kippebene bestimmt werden, also der Ebene, in der die Kippachse liegt.

Eine Abtasteinheit bzw. ein Scanner in einem Konfokalmikroskop kann aus drei Scaneinrichtungen bestehen. Zwei hiervon können in Y-Richtung ablenken, einer in X-Richtung. Die beiden in Y-Richtung ablenkenden Spiegel können die Kippachse auf den in X-Richtung ablenkenden Spiegel lenken, damit die Kippachse sowohl in X- als auch in Y-Richtung in der gleichen Ebene liegen, wie bei einem kardanisch gelagerten Spiegel.

Für das Lichtblattmodul kann bevorzugt eine Verkippung mit zwei Spiegeln in eine Richtung senkrecht zur Lichtblattebene erfolgen. Die Scanbewegung zur Erzeugung des Lichtblattes (virtuelles Lichtblatt) kann mit einem einzelnen Spiegel erfolgen, der eine schnellere Scanbewegung erlauben kann. Eine Verkippung über die Y-Scanner und eine Verlagerung der Kippachse in die hinteren Brennebene einer optischen Anordnung (beispielsweise der zweiten optischen Anordnung) kann sicherstellen, dass das Lichtblatt nicht gegenüber der Fokusebene der ersten optischen Anordnung verkippt ist. Somit kann vermieden werden, dass das Bild in den Randbereichen unscharf abgebildet wird.

Das erfindungsgemäße Mikroskop kann dadurch weiter verbessert werden, dass wenigstens ein Element aus der folgenden Liste von Elementen, umfassend
- die erste optische Anordnung;
- die zweite optische Anordnung;
- den Strahlengangselektor; und
- das Stoppfilter
bei an der Aufnahmevorrichtung angebrachtem Modul wiederholt auswechselbar aufgenommen sind.

Bevorzugt können mehrere der oben genannten Elemente gemeinsam auswechselbar sein, sodass ein entsprechender Betriebszustand ausgewählt werden kann.

Das Mikroskop kann einen weiteren Abbildungsstrahlengang umfassen, welcher ein weiteres Mikroskopobjektiv und einen weiteren Detektor aufweist, wobei mit dem Objektiv des weiteren Abbildungsstrahlengangs das Probenvolumen von einer Seite aus auf den weiteren Detektor abbildbar ist, welche dem optischen Modul abgewandt ist.

Der weitere Abbildungsstrahlengang des Mikroskops kann relativ zum optischen Modul bewegbar sein. Ebenso kann alternativ die erste optische Anordnung relativ zur zweiten optischen Anordnung bewegbar sein.

Zusätzlich zu dem zwischen der ersten optischen Anordnung oder der zweiten optischen Anordnung und dem Probenvolumen angeordneten Vorsatzelement kann ein weiteres Vorsatzelement zwischen der jeweils anderen optischen Anordnung und dem Probenvolumen angeordnet sein.

Die optische Achse des Mikroskopstrahlengangs und die optische Achse der ersten optischen Anordnung und/oder die optische Achse der zweiten optischen Anordnung und/oder die optische Achse des gegebenenfalls weiteren Abbildungsstrahlengangs können ein gemeinsames Objektfeld schneiden.

Die erste optische Anordnung und/oder die zweite optische Anordnung und/oder gegebenenfalls der weitere Abbildungsstrahlengang können eine variable Linse oder eine variabel einstellbare Flüssiglinse oder eine Vario-Optik aufweisen.

In einer weiteren Ausgestaltung des Mikroskops kann mit einem Scanner ein dynamisches Lichtblatt erzeugbar sein.

Es ist ferner denkbar, dass mit einer Zylinderlinse ein statisches Lichtblatt erzeugbar ist.

In einer weiteren Ausgestaltung des Mikroskops kann die erste optische Anordnung und/oder die zweite optische Anordnung ein Mikroskopobjektiv mit einer endlich Optik oder einer unendlich Optik aufweisen.

Obwohl einige Aspekte im Rahmen einer Vorrichtung beschrieben wurden, ist es klar, dass diese Aspekte auch eine Beschreibung des entsprechenden Verfahrens darstellen, wobei eine Vorrichtung einem Verfahrensschritt oder einer Funktion eines Verfahrensschritts entspricht. Analog dazu stellen Aspekte, die im Rahmen eines Verfahrensschritts beschrieben werden, auch eine Beschreibung eines entsprechenden Elements oder einer Eigenschaft einer entsprechenden Vorrichtung dar. Einige oder alle Verfahrensschritte können durch (oder unter Verwendung) einer Hardwarevorrichtung ausgeführt werden, wie es zum Beispiel ein Prozessor, ein Mikroprozessor, ein programmierbarer Computer oder eine elektronische Schaltung sein kann. In einigen Ausführungsbeispielen können ein oder mehrere der wichtigsten Verfahrensschritte durch eine solche Vorrichtung ausgeführt werden.

Abhängig von bestimmten Implementierungsanforderungen können Ausführungsbeispiele der Erfindung in Hardware oder Software implementiert werden. Die Implementierung kann mit einem nichtflüchtigen Speichermedium wie einem digitalen Speichermedium, wie beispielsweise einer Diskette, einer DVD, einem Blu-Ray, einer CD, einem ROM, einem PROM und EPROM, einem EEPROM oder einem FLASH-Speicher, durchgeführt werden, auf dem elektronisch lesbare Steuersignale gespeichert sind, die mit einem programmierbaren Computersystem so zusammenwirken (oder zusammenwirken können), dass das jeweilige Verfahren durchgeführt wird. Daher kann das digitale Speichermedium computerlesbar sein.

Einige Ausführungsbeispiele gemäß der Erfindung umfassen einen Datenträger mit elektronisch lesbaren Steuersignalen, die mit einem programmierbaren Computersystem zusammenwirken können, so dass eines der hierin beschriebenen Verfahren durchgeführt wird.

Im Allgemeinen können Ausführungsbeispiele der vorliegenden Erfindung als Computerprogrammprodukt mit einem Programmcode implementiert werden, wobei der Programmcode für die Ausführung eines der Verfahren wirksam ist, wenn das Computerprogrammprodukt auf einem Computer läuft. Der Programmcode kann beispielsweise auf einem maschinenlesbaren Träger gespeichert werden.

Weitere Ausführungsbeispiele umfassen das Computerprogramm zur Durchführung eines der hierin beschriebenen Verfahren, das auf einem maschinenlesbaren Träger gespeichert ist.

Mit anderen Worten, ein Ausführungsbeispiel der vorliegenden Erfindung ist daher ein Computerprogramm mit einem Programmcode zur Durchführung eines der hierin beschriebenen Verfahren, wenn das Computerprogramm auf einem Computer läuft.

Ein weiteres Ausführungsbeispiel der vorliegenden Erfindung ist daher ein Speichermedium (oder ein Datenträger oder ein computerlesbares Medium), das ein darauf gespeichertes Computerprogramm zum Ausführen eines der hierin beschriebenen Verfahren umfasst, wenn es von einem Prozessor ausgeführt wird. Der Datenträger, das digitale Speichermedium oder das aufgezeichnete Medium sind in der Regel greifbar und/oder nicht übergangslos. Ein weiteres Ausführungsbeispiel der vorliegenden Erfindung ist eine Vorrichtung, wie hierin beschrieben, die einen Prozessor und das Speichermedium umfasst.

Ein weiteres Ausführungsbeispiel der Erfindung ist daher ein Datenstrom oder eine Signalfolge, die das Computerprogramm zur Durchführung eines der hierin beschriebenen Verfahren darstellt. Der Datenstrom oder die Signalfolge kann beispielsweise so konfiguriert werden, dass sie über eine Datenkommunikationsverbindung, beispielsweise über das Internet, übertragen werden.

Ein weiteres Ausführungsbeispiel umfasst ein Verarbeitungsmittel, zum Beispiel einen Computer oder eine programmierbare Logikvorrichtung, das konfiguriert oder angepasst ist, um eines der hierin beschriebenen Verfahren auszuführen.

Ein weiteres Ausführungsbeispiel umfasst einen Computer, auf dem das Computerprogramm zum Ausführen eines der hierin beschriebenen Verfahren installiert ist.

Ein weiteres Ausführungsbeispiel gemäß der Erfindung umfasst eine Vorrichtung oder ein System, das konfiguriert ist, um (zum Beispiel elektronisch oder optisch) ein Computerprogramm zum Ausführen eines der hierin beschriebenen Verfahren an einen Empfänger zu übertragen. Der Empfänger kann beispielsweise ein Computer, eine mobile Vorrichtung, eine Speichervorrichtung oder dergleichen sein. Die Vorrichtung oder das System kann beispielsweise einen Dateiserver zum Übertragen des Computerprogramms an den Empfänger umfassen.

In einigen Ausführungsbeispielen kann eine programmierbare logische Vorrichtung (z.B. eine feldprogrammierbare Gatteranordnung, FPGA) verwendet werden, um einige oder alle Funktionalitäten der hierin beschriebenen Verfahren auszuführen. In einigen Ausführungsbeispielen kann eine feldprogrammierbare Gatteranordnung mit einem Mikroprozessor zusammenarbeiten, um eines der hierin beschriebenen Verfahren durchzuführen. Im Allgemeinen werden die Verfahren vorzugsweise von jedem Hardwaregerät durchgeführt.

Im Folgenden soll die vorliegende Erfindung anhand beigefügte Figuren näher erläutert werden. Diese Figuren zeigen rein beispielhafte Ausgestaltungen des erfindungsgemäßen Mikroskops und zugehöriger erfindungsgemäßer Verfahren. Die in den einzelnen Ausgestaltungen gezeigten technischen Merkmale sind beliebig miteinander kombinierbar und können auch weggelassen werden, wenn sie für eine besondere Ausgestaltung nicht notwendig sind.

Es zeigen:
- Fig. 1: ein schematischer Aufbau des erfindungsgemäßen Mikroskops;
- Fig. 2: ein schematischer Aufbau einer weiteren Ausgestaltung des erfindungsgemäßen Mikroskops;
- Fig. 3: eine schematische Darstellung des erfindungsgemäßen optischen Moduls zur Vermeidung von Vignettierung aufgrund verschobener Eintrittspupille;
- Fig. 4: eine schematische Darstellung einer Abtasteinheit mit freier einstellbareren der Ebene, in der die Kippachse des Strahls liegt;
- Fig. 5: eine schematische Darstellung einer weiteren Ausgestaltung des erfindungsgemäßen optischen Moduls zur Vermeidung von Vignettierung aufgrund verschobener Eintrittspupille;
- Fig. 6a: eine schematische Darstellung einer weiteren Ausgestaltung des erfindungsgemäßen optischen Moduls zur Vermeidung ungewollter Reflexionen;
- Fig. 6b: eine schematische Darstellung einer weiteren Ausgestaltung des erfindungsgemäßen optischen Moduls zur Vermeidung ungewollter Reflexionen;
- Fig. 7: eine schematische Darstellung einer Transmissionscharakteristik des wellenlängenselektiven optischen Elements;
- Fig. 8: ein Strahlengangselektor- Wechselmodul mit einer Vielzahl von Strahlengangselektoren;
- Fig. 9: und 10 jeweils eine schematische Ansicht eines weiteren Ausführungsbeispiels eines optischen Moduls;
- Fig. 11: eine schematische Ansicht eines weiteren Ausführungsbeispiels eines optischen Moduls mit einem weiteren Abbildungsstrahlengang; und
- Fig. 12: eine schematische Ansicht eines weiteren Ausführungsbeispiels eines optischen Moduls.

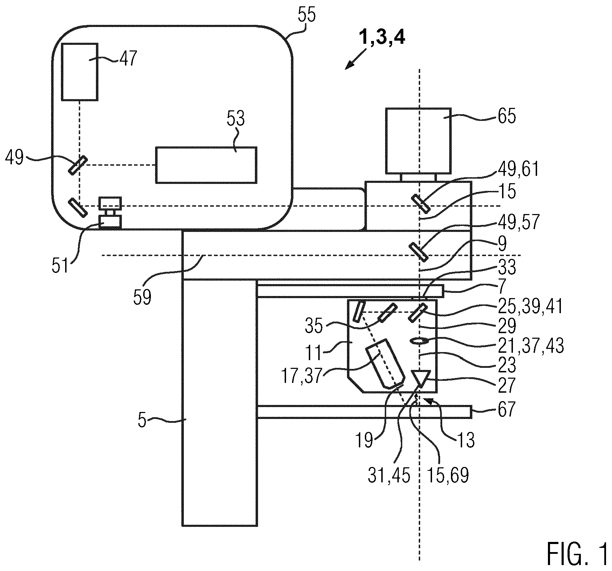

In Fig. 1 ist ein Mikroskop 1 gezeigt, welches ein zum Lichtblattmikroskop 3 umgebautes Konfokalmikroskop 4 ist. Das Mikroskop 1 umfasst einen Mikroskopkorpus 5, eine mechanische Aufnahmevorrichtung 7 für Mikroskopobjektive 37, durch die hindurch sich ein Mikroskopstrahlengang 9 erstreckt. An der Aufnahmevorrichtung 7 ist ein optisches Modul 11 zur Beleuchtung eines Probenvolumens 13 und zum Aufsammeln und Weiterleiten von Licht 15 aus dem Probenvolumen 13 angebracht. Das Probenvolumen 13 ist auf einem Probentisch 69 angeordnet.

Das optische Modul 11 umfasst eine erste optische Anordnung 17 mit einem ersten Strahlengang 19, eine zweite optische Anordnung 21 mit einem zweiten Strahlengang 23, einen optischen Strahlengangselektor 25, welcher den ersten Strahlengang 19 und/oder den zweiten Strahlengang 23 mit dem Mikroskopstrahlengang 9 zusammenführt.

Der optische Strahlengangselektor 25 ist als wellenlängenselektives optisches Element 39 ausgestaltet. Insbesondere ist dieses ein dichroitischer Spiegel 41.

Die zweite optische Anordnung 21 ist in Fig. 1 lediglich als einzelne Linse dargestellt, kann jedoch wie die erste optische Anordnung 17 ein Mikroskopobjektiv 37 sein. Insbesondere kann die zweite optische Anordnung 21 ein Lichtblattmodul 43 zur Erzeugung eines das Probenvolumen 13 durchquerenden Lichtblattes 45 sein.

Das Mikroskop 1 umfasst ferner eine Lichtquelle 47, einen Strahlteiler 49, einen Scanner 51 und eine Punktdetektoreinheit 53, die allesamt in einem Konfokalmodul 55 angeordnet sind.

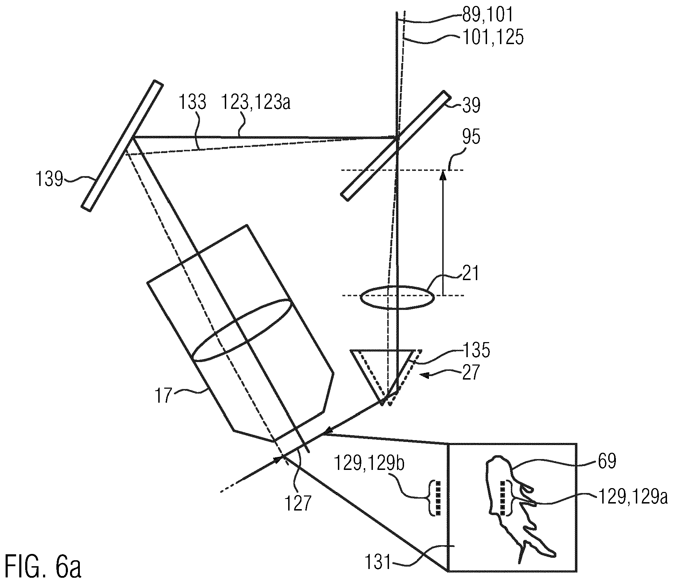

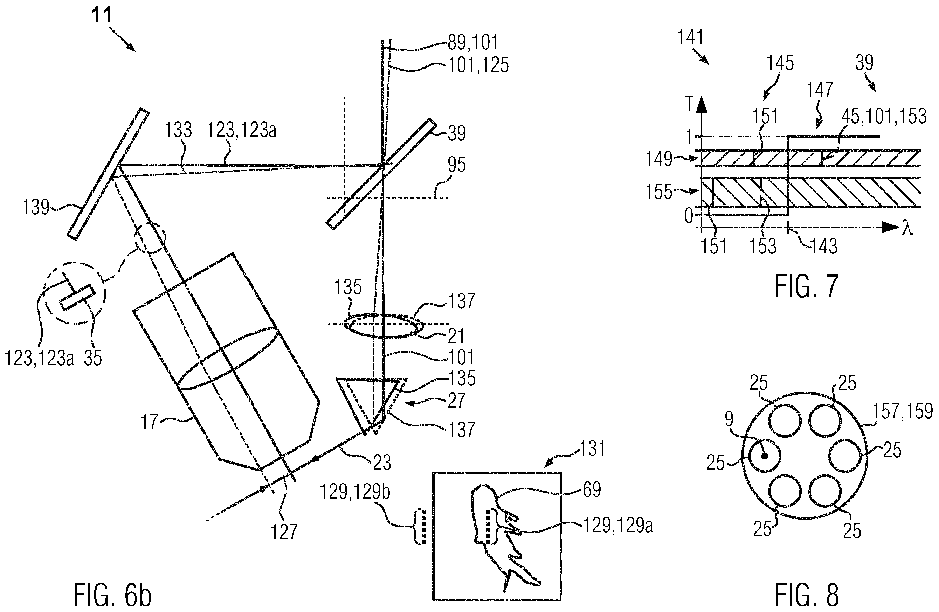

Neben dem wellenlängenselektiven optischem Element 39 des optischen Moduls 11 ist ein weiteres wellenlängenselektives optisches Element 57, welches ebenso ein Strahlteiler 49 ist, vorgesehen. Über dieses kann Manipulationslicht 59 in den Mikroskopstrahlengang 9 eingekoppelt werden. Ferner ist ein Stoppfilter 35 gezeigt, dessen Funktionsweise in Fig. 6 beschrieben wird.

Ferner ist ein drittes wellenlängenselektives optisches Element 61 (ebenso ein Strahlteiler 49) vorgesehen, welches eine optische Schnittstelle 63 darstellt, über die das Konfokalmodul 55 (auch Konfokaleinheit oder Rastereinheit im Falle einer Multiphotonen-Anregung genannt) und/oder eine Kamera 65 mit dem Mikroskopstrahlengang 9 verbunden werden können. Durch geeignete Wahl des dritten wellenlängenselektiven optischen Elements 61 können sowohl das Konfokalmodul 55 als auch die Kamera 65 zeitgleich mit Licht 15 der entsprechenden Wellenlänge bestrahlt werden, sodass zeitgleich mehrere Messungen der Probe 69 durchgeführt werden können.

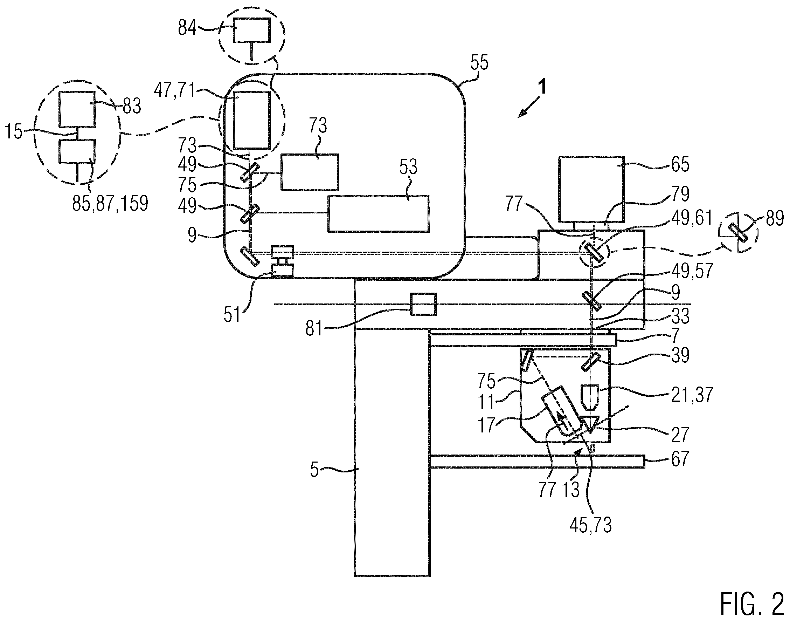

Die Fig. 2 zeigt eine weitere Ausgestaltung des erfindungsgemäßen Mikroskops 1, welches im Konfokalmodul 55 neben der Lichtquelle 47, die in dieser gezeigten Ausgestaltung eine Lichtquelle sichtbaren Lichts 71 ist, eine Nahinfrarot-Lichtquelle 73 aufweist. Auch die Nahinfrarot-Lichtquelle wird mittels eines Strahlteilers 49 in den Mikroskopstrahlengang 9 eingekoppelt. Der Scanner 51 lenkt somit sichtbares Licht 73 und nahinfrarotes Licht 75 gleichermaßen ab. Dies erlaubt es, in einem Konfokalmodus, Rastermodus bzw. Betriebszustand des Mikroskops 1 eine Mehrphotonenanregung im Probenvolumen 13 im selben Bereich durchzuführen, wo auch das sichtbare Licht 73 zur Beleuchtung eingestrahlt wird.

Im optischen Modul 11 wird in der gezeigten Ausgestaltung das nahinfrarote Licht 75 durch das wellenlängenselektive optische Element 39 zur ersten optischen Anordnung 17 reflektiert. Das sichtbare Licht 73, beispielsweise blaues Licht, wird durch das wellenlängenselektives optisches Element 39 hindurchtransmittiert und gelangt zur zweiten optischen Anordnung 21, die hier als Mikroskopobjektiv 37 dargestellt ist. Mit dem sichtbaren Licht 73 wird somit das Lichtblatt 45 ausgebildet, wohingegen das nahinfrarote Licht 75 durch die erste optische Anordnung 17 hindurch fokussiert wird.

Durch das nahinfrarote Licht 75 kann im Probenvolumen 13 Fluoreszenz angeregt und Fluoreszenzlicht 77 ausgesandt werden die von der ersten optischen Anordnung 17 aufgesammelt und vom wellenlängenselektiven optischen Element 39 reflektiert wird.

Das dritte wellenlängenselektive optische Element 61 ist für das Fluoreszenzlicht 77 transparent, sodass dieses von der Kamera 65 detektiert werden kann. Die Kamera ist am Tubus mittels einer Schnittstelle für Tuben 79 am Mikroskop 1 befestigt, alternativ kann der Tubus durch eine Tubuslinse mit Kameraadapter ersetzt sein (nicht gezeigt).

Das nahinfrarote Licht 75 kann somit zum Erzeugen von Mehrphotontendatensätzen (nicht gezeigt) dienen, die mit der Punktdetektoreinheit 53 erfasst wurden. Alternativ können Non Descanning Detektoren 81 (kurz: NDD) verwendet werden, die das Fluoreszenzlicht 77 über das weitere wellenlängenselektives optisches Element 57 empfangen. Die NDD 81 sind lediglich schematisch eingezeichnet.

In einer weiteren Ausgestaltung kann die Lichtquelle 47 eine breitbandige Lichtquelle 83 sein. Dies ist in einem Kreis über dem Mikroskop 1 dargestellt.

Diese breitbandige Lichtquelle 83 kann ausgesandtes Licht 15 durch ein wellenlängenveränderndendes Element 85 hindurch transmittieren. Das wellenlängenverändernde Element 85 stellt somit eine Umschaltvorrichtung 159 dar und kann im gezeigten Beispiel ein akustooptisches Transmissionsfilter (AOTF) 87 sein. Mittels diesem kann die Wellenlänge des Lichts 15 selektiert werden, sodass am wellenlängenselektiven Element 39 im optischen Modul 11 allein durch eine Einstellung des wellenlängenverändernden Elements 85 das Licht entweder zur ersten optischen Anordnung 17 oder zur zweiten optischen Anordnung 21 geleitet werden kann. Eine Frequenz des Umschaltens des wellenlängenverändernden Elements 85 kann dabei eine mögliche Bildrate für aufzunehmende Bilder bestimmen, ein Umschalten optischer Komponenten ist nicht notwendig. In einer solchen Ausgestaltung kann das 2 Wellenlängen selektive optische Element 61 durch einen Neutralteiler 89 ersetzt werden, der 50 % des eintreffenden Lichts reflektiert und 50 % transmittiert. Ebenso ist die Verwendung einer wellenlängenveränderlichen Lichtquelle 84 (diese stellt eine Umschaltvorrichtung 159 dar) möglich.

Der gezeigte Aufbau ermöglicht mehrere Kombinationen von Beleuchtung und Stimulation. Beispielsweise eine nahinfrarote Multiphototonen Lichtblattbeleuchtung und gleichzeitig eine flächige Beleuchtung mit sichtbarem Licht 73, oder eine Lichtblattbeleuchtung mit sichtbarem Licht 73 in Kombination mit einer Stimulation/Anregung der Probe 69 mittels sichtbarem Licht 73 (andere Wellenlänge) über die erste optische Anordnung 17.

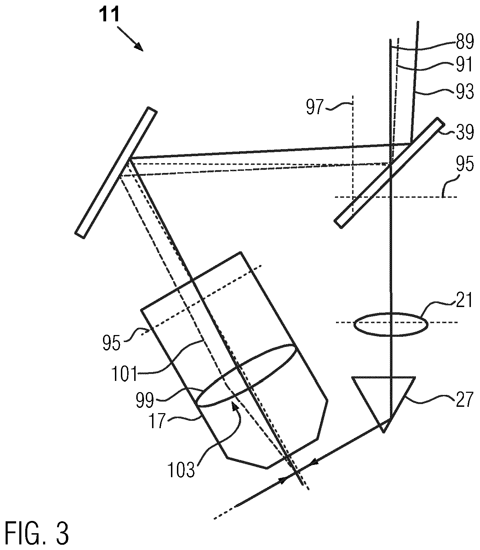

In Fig. 3 ist das optische Modul 11 gezeigt, wobei ein Beleuchtungsstrahl des Lichtblattes 89, ein konfokaler Beleuchtungsstrahl 91 sowie ein konfokaler Beleuchtungsstrahl mit verschobener Kippebene 93 gezeigt sind ferner sind hintere Brennebenen 95 der ersten 17 und auch der zweiten optischen Anordnung 21 gezeigt.

Zu erkennen ist, dass bei einem verkippten konfokalen Beleuchtungsstrahl 91 die Verkippung um eine Verkippungsebene 97 erfolgt und nicht um die hintere Brennebene 95 der ersten optischen Anordnung 17. Dies führt dazu, dass in den Optiken 99 Beleuchtungslicht 101 in Randbereichen 103 der Optiken 99 geführt wird. Dies kann zu einer Abschattung in den Randbereichen 103, der sogenannten Vignettierung führen.

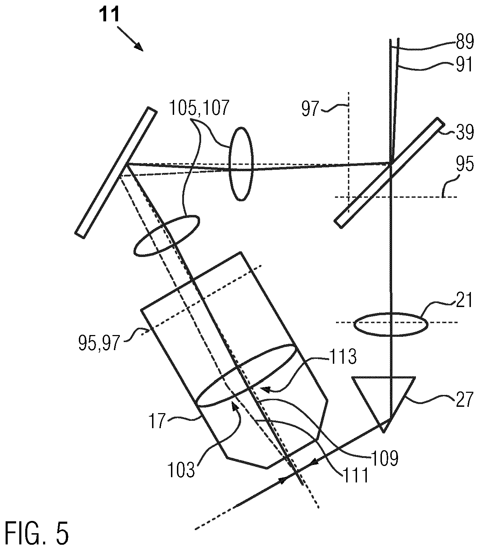

Dieser Abbildungsfehler bei verkippter Einstrahlung des Beleuchtungslicht 101 kann durch eine weitere Optik 105, insbesondere eine afokale Optik 107 vermieden werden. Dies ist in Fig. 5 dargestellt.

Auch hier ist der konfokale Beleuchtungsstrahl 91 verkippt, wird jedoch durch die weitere Optik 105/ die afokale Optik 107 derart abgelenkt, dass der konfokale Beleuchtungsstrahl 91 um die hintere Brennebene 95 der ersten optischen Anordnung 17 herum verkippt wird. Die hintere Brennebene 95 ist somit die Verkippungsebene 97 Der ursprüngliche Strahlengang des konfokalen Beleuchtungsstrahls 91 ist gestrichelt eingezeichnet.

Der korrigierte konfokale Beleuchtungsstrahl 109 wird im Gegensatz zum unkorrigierten konfokalen Beleuchtungsstrahl 111 nicht mehr durch die Randbereiche 103 geführt, sondern im achsennahen Bereich 113. Eine Vignettierung wird somit abgeschwächt oder gar vollständig vermieden.

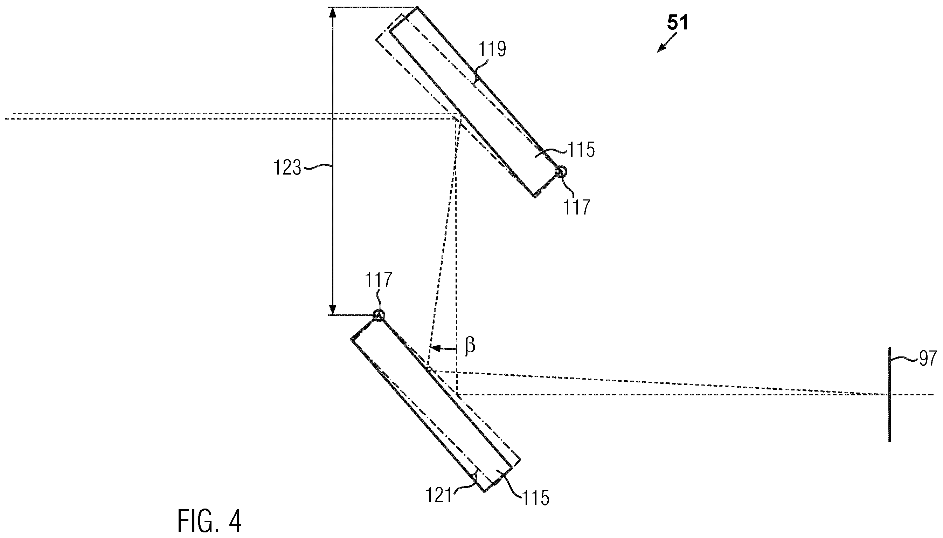

In der Fig. 4 ist ein Scanner 51 gezeigt, bei dem zwei Spiegel 115 um parallele Drehachsen 117 verkippt werden können. Allerdings wird ein erster Spiegel 115a um einen ersten Winkel 119 und ein zweiter Spiegel 115b um einen zweiten Winkel 121 verkippt. Der erste Winkel einer 19 und der zweite Winkel 121 unterscheiden sich voneinander, sodass in Kombination mit einem Abstand 123 zwischen den Spiegeln 115 die Position der Verkippungsebene 97 festgelegt werden kann. Dieses Verfahren ist auch als beam-walking bekannt.

In Fig. 6a ist das optische Modul 11 gezeigt, wobei der Beleuchtungsstrahl des Lichtblattes 89 und ein verkippter Beleuchtungsstrahl des Lichtblattes 125 gezeigt sind. Soll nunmehr entlang des Beleuchtungsstrahls des Lichtblattes 89 Beleuchtungslicht 101 durch das wellenlängenselektive optische Element 39 hindurch transmittiert werden, so kann an diesem eine ungewollte Reflexion erfolgen, sodass ein Anteil Beleuchtungslicht 123 in Richtung der ersten optischen Anordnung 17 reflektiert wird. Dieser Anteil 123 kann 0,1 % bis 1,0 % (je nach Spezifikation der Filterfirmen kann dieser Anteil auch mehr als 1 % betragen) des ursprünglich eingestrahltes Beleuchtungslichts 101 betragen.

Erfolgt die Beleuchtung entlang des Beleuchtungsstrahls des Lichtblattes 89, so wird der Anteil Beleuchtungslicht 123, dieser Anteil 123 wird zur Unterscheidung im Folgenden als erster Anteil 123a bezeichnet, durch die erste optische Anordnung 17 in ein Bildfeld 127 der ersten optischen Anordnung 17 fokussiert und kann zu störenden Artefakten 129 in Bilddaten 131 der Probe 69 führen. Diese Artefakte 129 werden zur Unterscheidung im Folgenden erste Artefakte 129a genannt.

Wird das Beleuchtungslicht 101 jedoch entlang des verkippten Beleuchtungsstrahls des Lichtblattes 125 eingestrahlt, so tritt dennoch ein zweiter reflektierter Anteil 133 auf, dieser trifft jedoch nach Durchgang durch die erste optische Anordnung 17 außerhalb des Bildfeldes 127 auf. D.h., dass dieser zweite reflektierte Anteil 133 die Probe 69 nicht innerhalb des Bildfeldes 127 erreicht. Diese Artefakte 129, zur Unterscheidung zweite Artefakte 129b genannt, befinden sich somit nicht in den Bilddaten 131.

Während der eingeführten Verkippung des Beleuchtungsstrahls 89 wird die erste optische Anordnung 17 nicht in ihrer Lage verändert. Da für eine Lichtblattaufnahme jedoch der erste Strahlengang 19 und der zweite Strahlengang 23 senkrecht zueinander stehen sollten, wird das Vorsatzelement 27 seitlich verschoben. Dies ist durch gestrichelte Linien schematisch dargestellt.

Das mit durchgezogener Linie gezeichnete Vorsatzelement 27 kennzeichnet eine Lage 135 für den verkippten Beleuchtungsstrahl des Lichtblattes 125. Dahingegen ist eine optimale Lage 137 für den unverkippten Beleuchtungsstrahl des Lichtblattes 89 durch eine gestrichelte Linie angedeutet.

Zur Vermeidung von Farbquerfehler des Beleuchtungsobjektiv bei Verkippung des Beleuchtungsstrahls ist hier eine weitere Alternative mit Bezug auf beigefügte Fig. 6b beschrieben:
Wird die zweite optische Anordnung 21 weit außerhalb der Bildmitte verkippt beleuchtet können Farbquerfehler auftreten. Dies zeigt sich dann bei der Verwendung von unterschiedlichen Beleuchtungswellenlängen als Fokusversatz in der Beleuchtungsebene (unterschiedliche Ebenen werden beleuchtet). Um dies zu vermeiden wird bei verkipptem Beleuchtungsstrahl des Lichtblattes 125 die zweite optische Anordnung 21 mitsamt dem Vorsatzelement 27 ebenfalls um diesen Winkelbetrag verkippt (als Beispiel 1°- 8°). Somit können einerseits Abbildungsfehler in Form von Farbquerfehlern vermieden werden und andererseits sichergestellt sein, dass für die Lichtblattaufnahme der erste Strahlengang 19 und der zweite Strahlengang 23 senkrecht zueinander stehen. Das Detektionsobjektiv 17 muss folglich nicht entsprechend verkippt werden.

Die mit durchgezogener Linie gezeichnete zweite optische Anordnung 21 und das Vorsatzelement 27 kennzeichnen die Lage 135 für den verkippten Beleuchtungsstrahl des Lichtblattes 125, gestrichelt gezeichnet ist die optimale Lage 137 für den unverkippten Beleuchtungsstrahl des Lichtblattes 89 angedeutet.

Auch in der Fig. 6b sind die zweiten Artefakte 129b, welche dadurch entstehen, dass der zweite reflektierte Anteil 133 durch die erste optische Anordnung 17 auftreten, gezeigt. Diese zweiten Artefakte 129b liegen jedoch außerhalb des Bildfeldes 127 und befinden sich somit nicht in den Bilddaten 131. Gezeigt sind ferner auch die ersten Artefakte 129a, welche in den Bilddaten 131 für den Beleuchtungsstrahl des Lichtblattes 89 und ohne Verwendung eines im Folgenden beschriebenen Stoppfilters 35 auftreten.

Alternativ kann die hier beschriebene ungewollte Reflexion dadurch vermieden werden, dass das oben erwähnte Stoppfilter 35 zwischen das wellenlängenselektive optische Element 39 und die erste optische Anordnung 17 eingebracht wird. Bevorzugt befindet sich das Stoppfilter 35 zwischen einem Umlenkspiegel 139 und der ersten optischen Anordnung 17. Das Stoppfilter 35 blockiert den Anteil Beleuchtungslicht 123, sodass dieser keine störenden Artefakte 129 in den Bilddaten 131 ausbilden kann.

In Fig. 7 ist eine Transmissionscharakteristik des wellenlängenselektives optischen Elements 39 gezeigt. Aufgetragen ist die Transmission T über der Wellenlänge 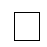 , wobei die Transmission T idealerweise in einem ersten spektralen Bereich 145 null beträgt und an einer Filterkante 143, d.h. in einem zweiten spektralen Bereich 147 auf eins ansteigt. Im Idealfall kann die Reflexionscharakteristik R (nicht gezeigt) aus der Transmissionscharakteristik 141 über die Formel T+R=1 erhalten werden.

In einem Lichtblattmodus 149, der schematisch durch eine waagerechte Schraffur dargestellt ist liegt eine erste Wellenlänge 151 im ersten spektralen Bereich 145 und einer zweite Wellenlänge 153 im zweiten spektralen Bereich 147, sodass Licht 15 der ersten Wellenlänge 151 am wellenlängenselektiven optischen Element 39 reflektiert wird (Transmission T ist null), wohingegen Licht 15 der zweiten Wellenlänge 153 transmittiert wird. Das Licht 15 der zweiten Wellenlänge 153 kann somit Beleuchtungslicht 101 für das Lichtblatt 45 darstellen.

In einem ersten Mikroskopiemodus 155 - dieses ebenso durch einen schraffierten Bereich dargestellt befinden sich sowohl die erste Wellenlänge 151, als auch die zweite Wellenlänge 153 im ersten spektralen Bereich 145.

Ein Umschalten zwischen dem Lichtblattmodus 149 und dem ersten Mikroskopiemodus 155 kann somit dadurch erfolgen, dass (a) die Lage der Filterkante 143 variiert wird oder (b) wenigstens eine Wellenlänge über die Filterkante 143 hinaus in den selben spektralen Bereich der weiteren Wellenlänge verschoben wird.

Ein Vorgehen gemäß (a) kann dadurch realisiert werden, dass das wellenlängenselektives optisches Element 39 ausgetauscht wird. Dies kann beispielsweise mittels einer in Fig. 8 gezeigten als Strahlengangselektor-Wechselmodul 157 ausgestalteten Umschaltvorrichtung 159 erfolgen, welche im gezeigten Fall wechselweise unterschiedliche Strahlengangselektoren 25 in den Mikroskopstrahlengang 9 einbringen kann.

Im Fall von einem Vorgehen nach (b) kann das in Fig. 2 gezeigte wellenlängenverändernde Element 85 verwendet werden, um beispielsweise die zweite Wellenlänge 153 in den ersten spektralen Bereich 145 zu verschieben.

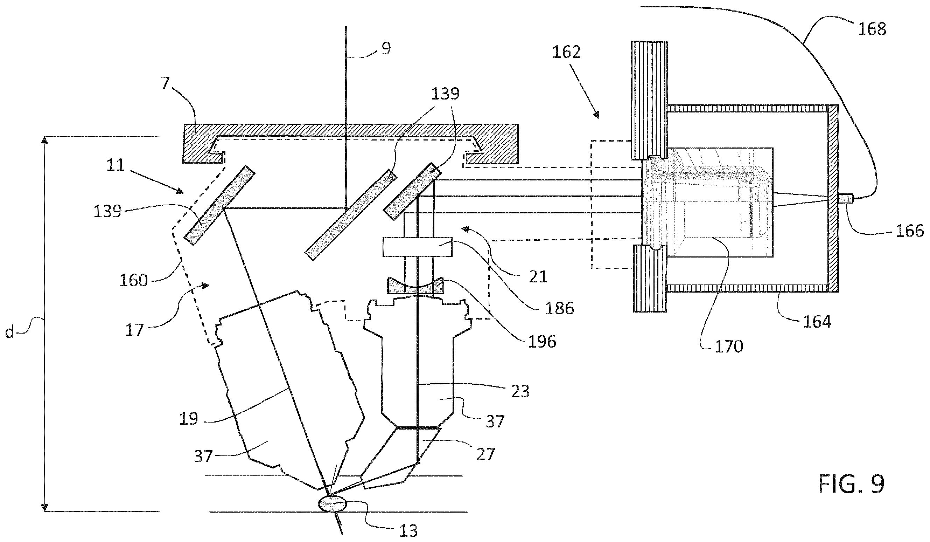

Fig. 9 zeigt ein weiteres Ausführungsbeispiel eines optischen Moduls 11, welches an einer mechanischen Aufnahmeeinrichtung 7 eines in Fig. 9 nicht gezeigten Mikroskops bzw. Mikroskopkorpus mit einem Mikroskopstrahlengang 9 adaptiert ist. Dieses optische Modul 11 weist ein Gehäuse 160 auf, in welchem die erste optische Anordnung 17 mit dem ersten Strahlengang 19 sowie die zweite optische Anordnung 21 mit dem zweiten, den ersten Strahlengang 19 im Probenvolumen 13 schneidenden Strahlengang 23 angeordnet ist. Es ist ein Vorsatzelement 27 zwischen der zweiten optischen Anordnung 21 und dem Probenvolumen 13 angeordnet, wobei der zweite Strahlengang 23 durch das Vorsatzelement 27 verläuft. Mit Hilfe der Zylinderlinse 196 kann mit der zweiten optischen Anordnung 21 ein statisches Lichtblatt generiert werden.

Am Gehäuse 160 des optischen Moduls 11 ist eine Einkoppelstelle 162 vorgesehen, über die Beleuchtungslicht zum Beleuchten eines Teils des Probenvolumens 13 über den zweiten Strahlengang 23 erfolgt. So könnte das Beleuchtungslicht einerseits kollimiert als frei verlaufender Lichtstrahl in den zweiten Strahlengang 23 eingekoppelt werden, wobei in diesem Fall die Einkoppelstelle beispielsweise in Form eines Durchgangs im Gehäuse 160 des optischen Moduls 11 ausgebildet ist (in Fig. 9 nicht gezeigt). Im Konkreten ist an der Einkoppelstelle 162 ein Gehäuseteil 164 angeordnet, an dem ein Faserkoppler 166 einer Lichtleitfaser 168 angeordnet ist. Über die Lichtleitfaser 168 wird Beleuchtungslicht einer nicht in Fig. 9 gezeigten Lichtquelle in den zweiten Strahlengang 23 eingekoppelt. Hierzu ist eine Kollimationsoptik vorgesehen, mit der das vom Faserkoppler divergent austretende Beleuchtungslicht kollimiert wird.

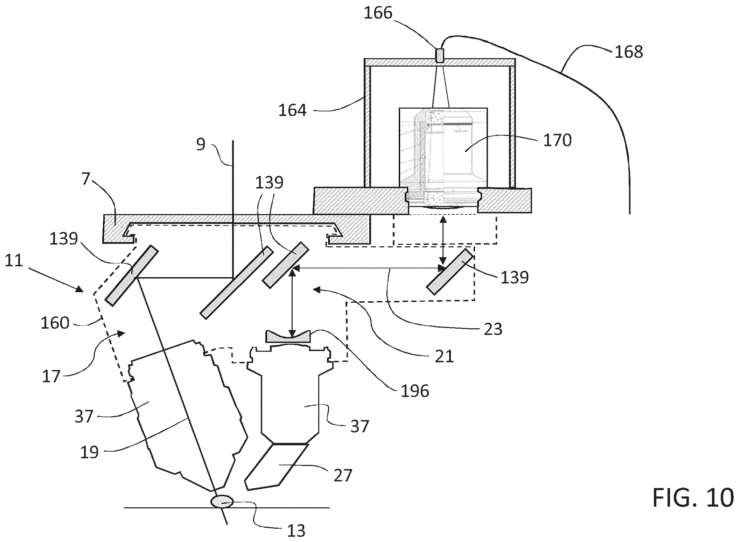

Fig. 10 zeigt ein weiteres Ausführungsbeispiel, bei welchem das Gehäuseteil 164 von oben bzw. an einer anderen Seite des Gehäuses 160 des optischen Moduls 11 angeordnet ist, wodurch zwar ein weiterer, der Kollimationsoptik 170 nachgeordneter Umlenkspiegel 139 erforderlich ist, wo jedoch andere Anforderungen an den äußeren Bauraum erfüllt werden können, als das beim Ausführungsbeispiel der Fig. 9 der Fall ist.

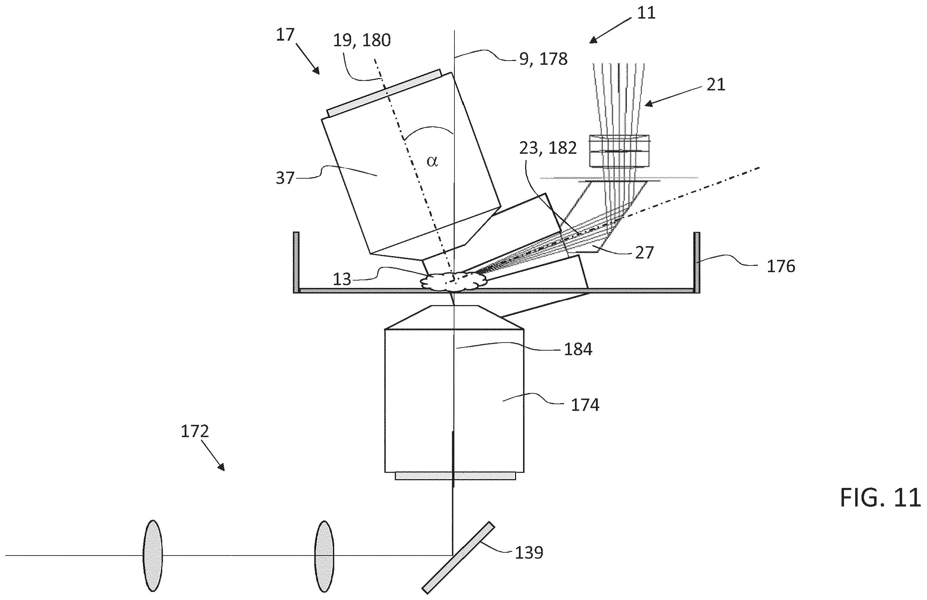

Fig. 11 zeigt ein weiteres Ausführungsbeispiel, bei welchem ein weiterer Abbildungsstrahlengang 172 vorgesehen ist. Der weitere Abbildungsstrahlengang 172 weist ein Mikroskopobjektiv 174 und einen weiteren, in Fig. 11 nicht gezeigten Detektor auf, der z.B. unterhalb des in Form eines geeignet ausgebildeten dichriotischen Stahlteilers 139 angeordnet sein könnte. Mit dem Objektiv 174 des weiteren Abbildungsstrahlengangs 172 kann das Probenvolumen 13 von einer Seite aus auf den weiteren Detektor abgebildet werden, welche dem optischen Modul 11 abgewandt ist. Mit anderen Worten kann dasselbe Objekt bzw. Probenvolumen 13 mit dem weiteren Abbildungsstrahlengang 172 von der unteren Seite des in Fig. 11 exemplarisch eingezeichneten Probenbehälters 176 abgebildet werden, wohingegen das Probenvolumen 13 mit dem optischen Modul 11 von oben bezogen auf den Probenbehälter 176 abgebildet werden kann. Dies ist gleichzeitig oder zeitlich hintereinander möglich. Auch ist es möglich, das Objekt in dem Probenvolumen über den weiteren Abbildungsstrahlengang 172 gezielt zu manipulieren, beispielsweise mittels gepulstem oder kontinuierlichem Licht geeigneter Wellenlänge, Intensität und/oder Strahlprofil. Insoweit kann auch vorgesehen sein, dass der weitere Abbildungsstrahlengang 172 lediglich der Objektmanipulation dient.

In einer bevorzugten Ausführungsform ist der weitere Abbildungsstrahlengang 172 relativ zum optischen Modul 11 bewegbar angeordnet. Alternativ oder zusätzlich kann die erste optische Anordnung 17 relativ zur zweiten optischen Anordnung 21 bewegbar angeordnet sein, beispielsweise in einer im Wesentlichen horizontalen Richtung der Fig. 9.

Bevorzugt könnte zusätzlich zu dem zwischen der ersten optischen Anordnung 17 oder der zweiten optischen Anordnung 21 und dem Probenvolumen 13 angeordneten Vorsatzelement 27 ein weiteres Vorsatzelement (in den Fig. nicht gezeigt) zwischen der jeweils anderen optischen Anordnung 21, 17 und dem Probenvolumen 13 angeordnet sein. Somit kann auch der Winkel α zwischen der optischen Achse 180 des Mikroskopobjektivs 37 des ersten Strahlengangs 19 der ersten optischen Anordnung 17 und der optischen Achse 182 des zweiten Strahlengangs 23 (nach dem Vorsatzelement 27) der zweiten optischen Anordnung 21 verändert werden und insbesondere verkleinert oder gar einen Winkel von im Wesentlichen Null Grad eingestellt werden, wenn beispielsweise das weitere Vorsatzelement im Sinn eines Umlenkelements ausgebildet ist, was die optische Achse des ersten Strahlengangs 19 der ersten optischen Anordnung 17 entsprechend umlenkt.

Ganz besonders bevorzugt schneiden die optische Achse 178 des Mikroskopstrahlengangs 9 und die optische Achse 180 der ersten optischen Anordnung 17 und/oder die optische Achse 182 der zweiten optischen Anordnung 21 und/oder die optische Achse 184 des gegebenenfalls weiteren Abbildungsstrahlengangs 172 ein gemeinsames Objektfeld oder einen gemeinsamen Bereich im Probenvolumen 13, was z.B. in Fig. 11 angedeutet ist. Das gemeinsame Objektfeld ist in diesem Zusammenhang insbesondere als der Bereich des Mikroskopobjektivs 37 der ersten optischen Anordnung 17 zu verstehen, der in der Fokusebene des Mikroskopobjektivs 37 liegt und davon auf einen Detektor abbildbar ist. Durch die Ausgestaltung der Strahlengänge des Mikroskopkorpus, der ersten optischen Anordnung 17, der zweiten optischen Anordnung 21 und/oder des gegebenenfalls weiteren Abbildungsstrahlengangs 172 kann in besonders vorteilhafter Weise gleichzeitig oder zeitversetzt dasselbe Objekt von unterschiedlichen Seiten aus abgebildet werden, nämlich z.B. mit dem Mikroskopobjektiv 37 der ersten optischen Anordnung 17 oder mit dem weiteren Mikroskopobjektiv 174 des weiteren Abbildungsstrahlengangs 172.

Die erste optische Anordnung 17 und/oder die zweite optische Anordnung 21 und/oder gegebenenfalls der weitere Abbildungsstrahlengang 172 könnte jeweils eine variable Linse 186 (siehe Fig. 9) oder eine variabel einstellbare Flüssiglinse - basierend beispielsweise auf der Technologie der Elektrobenetzung - oder eine Vario-Optik aufweisen. Hiermit kann beispielsweise die Fokusposition und/oder die wirksame (Beleuchtungs)-Apertur der zweiten optischen Anordnung 21 bezogen auf den ersten Strahlengang 19 bzw. auf das Mikroskopobjektiv 37 des variiert werden.

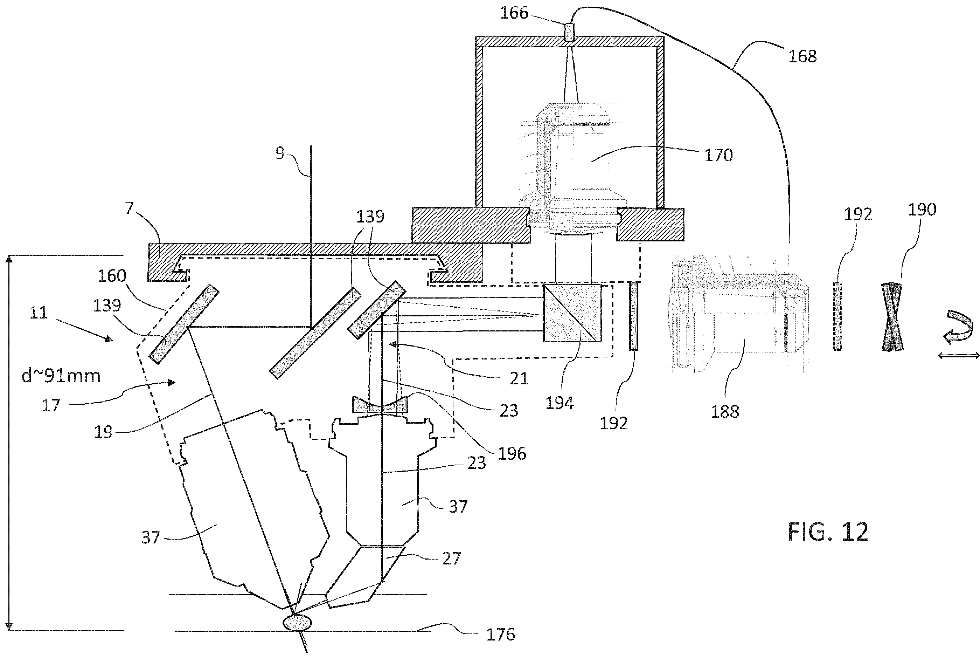

Eine Beeinflussung des mittels des der zweiten optischen Anordnung 21 generierten Probenbeleuchtung kann alternativ oder zusätzlich auch mit dem in Fig. 12 gezeigten weiteren Ausführungsbeispiel (welches einen ähnlichen Aufbau wie das Ausführungsbeispiel der Fig. 10 hat) realisiert werden. Hierzu ist der Kollimationsoptik 170 ein Polarisationsstrahlteiler 194 geeignet nachgeordnet, der in diesem Ausführungsbeispiel das von der Kollimationsoptik 170 kommende linear polarisierte Beleuchtungslicht in Richtung der Optik 188 umlenkt. Die Optik 188 ist eingerichtet, das Beleuchtungslicht zu fokussieren. Das Beleuchtungslicht propagiert dann zum beweglich angeordneten Spiegel 190. Der Spiegel 190 kann in Fig. 12 in horizontaler Richtung nach links oder rechts bewegt werden und/oder gegenüber der optischen Achse der Optik 188 verkippt werden (siehe die zwei Doppelpfeile). Nachdem das Beleuchtungslicht zweimal durch die Verzögerungsplatte 192 gelaufen ist, ist die Polarisationsrichtung des Beleuchtungslichts gegenüber der Polarisationsrichtung des von der Kollimationsoptik 170 kommenden Lichts derart gedreht, dass es den Polarisationsstrahlteiler 194 im Wesentlichen geradlinig durchlaufen kann und somit über den zweiten Strahlengang 23 der zweiten optischen Anordnung 21 das Probenvolumen 13 beleuchtet. Durch Bewegen des beweglichen Spiegels 190 kann die Beleuchtungssituation im Probenvolumen 13 entsprechend geändert werden. So kann die Fokusposition des erzeugten Lichtblatts in Ausbreitungsrichtung des Beleuchtungslichts variiert werden, wenn der Spiegel 190 in horizontaler Richtung nach links oder rechts bewegt wird. Ein Versetzen bzw. Verkippen des Lichtblatts ist durch ein entsprechendes Verkippen des Spiegels 190 gegenüber der optischen Achse der Optik 188 möglich. Die Verzögerungsplatte 192 kann entweder zwischen der Optik 188 und dem Spiegel 190 oder aber zwischen der Optik 188 und dem Polarisationsstrahlteiler 194 angeordnet sein. In Fig. 12 sind die beiden Positionen für die Verzögerungsplatte 192 eingezeichnet, es ist jedoch nur eine Verzögerungsplatte 192 im Strahlengang erforderlich.

Nun könnte ein Lichtblatt im Sinn eines virtuellen Lichtblatts beispielsweise mit einem in Fig. 11 nicht gezeigten Scanner des Konfokalmikroskops in dynamischer Weise erzeugt werden. In diesem Fall ist im zweiten Strahlengang 23 keine Zylinderlinse angeordnet. Alternativ kann auch mit dem in Fig. 11 nicht gezeigten Scanner des Konfokalmikroskops ein statisches Lichtblatt erzeugt werden, wenn z.B. die Scanspiegel des Scanners des Konfokalmikroskops in einer geeigneten Position "geparkt" werden, wobei dann im zweiten Strahlengang 23 eine geeignete Zylinderlinse an einer geeigneten Position angeordnet ist (siehe z.B. die Zylinderlinse 196 in Fig. 9).

Nun kann die erste optische Anordnung 17 und/oder die zweite optische Anordnung 21 des optischen Moduls 11 ein Mikroskopobjektiv 37 eine endlich Optik (z.B. auf 160 mm gerechnet und dann ohne Tubuslinse) oder eine unendlich Optik aufweisen. Im Fall, dass ein Mikroskopobjektiv 37 mit einer unendlich Optik verwendet wird, ist eine Tubuslinse vorgesehen, die im optischen Modul 11 an einer geeigneten Position angeordnet sein kann.

Der Begriff "und/oder" umfasst alle Kombinationen von einem oder mehreren der zugehörigen aufgeführten Elemente und kann mit "/" abgekürzt werden.

Obwohl einige Aspekte im Rahmen einer Vorrichtung beschrieben wurden, ist es klar, dass diese Aspekte auch eine Beschreibung des entsprechenden Verfahrens darstellen, wobei ein Block oder eine Vorrichtung einem Verfahrensschritt oder einer Funktion eines Verfahrensschritts entspricht. Analog dazu stellen Aspekte, die im Rahmen eines Verfahrensschritts beschrieben werden, auch eine Beschreibung eines entsprechenden Blocks oder Elements oder einer Eigenschaft einer entsprechenden Vorrichtung dar.

### Bezugszeichen

- 1: Mikroskop
- 3: Lichtblattmikroskop
- 4: Konfokalmikroskop
- 5: Mikroskopkorpus
- 7: mechanische Aufnahmevorrichtung
- 9: Mikroskopstrahlengang
- 11: optisches Modul
- 13: Probenvolumen
- 15: Licht
- 17: erste optische Anordnung
- 19: erster Strahlengang
- 21: zweite optische Anordnung
- 23: zweiter Strahlengang
- 25: optischer Strahlengangselektor
- 27: Vorsatzelement
- 29: Drehachse
- 31: Schnitt
- 33: Öffnung
- 35: Stoppfilter
- 37: Mikroskopobjektiv
- 39: wellenlängenselektives optisches Element
- 41: dichroitischer Spiegel
- 43: Lichtblattmodul
- 45: Lichtblatt
- 47: Lichtquelle
- 49: Strahlteiler
- 51: Scanner
- 53: Punktdetektoreinheit
- 55: Konfokalmodul
- 57: weiteres wellenlängenselektives optisches Element
- 59: Manipulationslicht
- 61: drittes wellenlängenselektives optisches Element
- 63: optische Schnittstelle
- 65: Kamera
- 67: Probentisch
- 69: Probe
- 71: Lichtquelle sichtbaren Lichts
- 73: sichtbares Licht
- 75: nahinfrarotes Licht
- 77: Fluoreszenzlicht
- 79: Schnittstelle für Tuben
- 81: Non Descanning Detektoren
- 83: breitbandige Lichtquelle
- 84: wellenlängenveränderliche Lichtquelle
- 85: wellenlängenveränderndes Element
- 87: akustooptisches Transmissionsfilter (AOTF)
- 89: Beleuchtungsstrahl des Lichtblattes
- 91: konfokaler Beleuchtungsstrahl
- 93: konfokaler Beleuchtungsstrahl mit verschobener Kippebene
- 95: hintere Brennebene
- 97: Verkippungsebenen
- 99: Optik
- 101: Beleuchtungslicht
- 103: Randbereich
- 105: weitere Optik
- 107: afokale Optik
- 109: korrigierter konfokaler Beleuchtungsstrahl
- 111: unkorrigierter konfokaler Beleuchtungsstrahl
- 113: achsennaher Bereich
- 115: Spiegel
- 115a: erster Spiegel
- 115b: zweiter Spiegel
- 117: Drehachse
- 119: erster Winkel
- 121: zweiter Winkel
- 123: Anteil Beleuchtungslicht
- 123a: erster Anteil
- 125: verkippter Beleuchtungsstrahl des Lichtblattes
- 127: Bildfeld
- 129: Artefakt
- 129a: erste Artefakte
- 129b: zweite Artefakte
- 131: Bilddaten
- 133: zweiter reflektierter Anteil
- 135: Lage für den verkippten Beleuchtungsstrahl des Lichtblattes
- 137: optimale Lage für den unverkippten Beleuchterstrahl des Lichtblattes
- 139: Umlenkspiegel
- 141: Transmissionscharakteristik
- 143: Filterkante
- 145: erster spektraler Bereich
- 147: zweiter spektraler Bereich
- 149: Lichtblattmodus
- 151: erste Wellenlänge
- 153: zweite Wellenlänge
- 155: erster Mikroskopiemodus
- 157: Strahlengangselektor- Wechselmodul
- 159: Umschaltvorrichtung
- 160: Gehäuse von (11)
- 162: Einkoppelstelle
- 164: Gehäuseteil von (11)
- 166: Faserkoppler
- 168: Lichtleitfaser
- 170: Kollimationsoptik
- 172: weiterer Abbildungsstrahlengang
- 174: weiteres Mikroskopobjektiv von (172)
- 176: Probenhalter
- 178: optische Achse von (9)
- 180: optische Achse von (17 bzw. 19)
- 182: optische Achse von (21 bzw. 23)
- 184: optische Achse von (172)
- 186: variable Linse
- 188: Optik
- 190: beweglich angeordneter Spiegel
- 192: Verzögerungsplatte
- 194: Polarisationsstrahlteiler
- 196: Zylinderlinse

## Patentansprüche

1. Mikroskop (1), umfassend einen Mikroskopkorpus (5), eine mechanische Aufnahmevorrichtung (7) für Mikroskopobjektive, durch die hindurch sich ein Mikroskopstrahlengang (9) erstreckt, und ein an der Aufnahmevorrichtung (7) anbringbares optisches Modul (11) zur Beleuchtung eines Probenvolumens (13) und zum Aufsammeln und Weiterleiten von Licht (15) aus dem Probenvolumen (13), wobei das optische Modul (11) aufweist:
- eine erste optische Anordnung (17) mit einem ersten Strahlengang (19);
- eine zweite optische Anordnung (21) mit einem zweiten, den ersten Strahlengang (19) im Probenvolumen (13) schneidenden Strahlengang (23), wobei die zweite optische Anordnung (21) als Lichtblattmodul (43) zur Erzeugung eines das Probenvolumen (13) durchquerenden Lichtblattes (45) ausgestaltet ist;
- eine Einkoppelstelle (162) für Beleuchtungslicht zum Beleuchten eines Teils des Probenvolumens (13) über den ersten Strahlengang (19) und/oder den zweiten Strahlengang (23); und
- ein Vorsatzelement (27) zwischen der ersten optischen Anordnung (17) und/oder der zweiten optischen Anordnung (21) und dem Probenvolumen (13), wobei der erste Strahlengang (19) oder der zweite Strahlengang (23) zumindest abschnittsweise durch das Vorsatzelement (27) verläuft,
wobei das Mikroskop (1) einen Flächensensor zur Detektion von aus dem Probenvolumen (13) aufgesammeltem Licht (15) umfasst.

2. Mikroskop (1) nach Anspruch 1, wobei das Mikroskop (1) ein zum Lichtblattmikroskop (3) umgebautes Konfokalmikroskop (4) ist.

3. Mikroskop (1) nach Anspruch 1 oder 2, wobei eine Lichtleitfaser (168) vorgesehen ist, die ausgestaltet ist, das Beleuchtungslicht zur Einkoppelstelle zu transportieren.

4. Mikroskop (1) nach einem der Ansprüche 1 bis 3, wobei das Mikroskop (1) eine Umschaltvorrichtung (159) aufweist, mittels der das Mikroskop (1) reversibel und wiederholt zumindest in einen ersten Mikroskopiemodus (155) aus der folgenden Liste von Betriebszuständen:
- einen rastermikroskopischen Modus;
- einen nichtlinearen Beleuchtungsmodus;
- einen Konfokalmodus; und
- einen Lichtfeldmodus;
oder einen Lichtblattmodus (149) schaltbar ist.

5. Mikroskop (1) nach einem der Ansprüche 1 bis 4, wobei das Mikroskop einen als ein wellenlängenselektives optisches Element (39) ausgestalteten Strahlengangselektor aufweist.

6. Mikroskop (1) nach Anspruch 5, wobei das wellenlängenselektive optische Element (39) mindestens eine spektrale Filterkante (143) aufweist, welche einen ersten spektralen Bereich (145) von einem zweiten spektralen Bereich (147) trennt, wobei das wellenlängenselektive optische Element (39) für den ersten spektralen Bereich (145) und für den zweiten spektralen Bereich (147) unterschiedliche Transmission- und Reflexionseigenschaften (T, R) aufweist, wobei
- im Lichtblattmodus (149) die spektrale Filterkante (149) spektral zwischen einer ersten Wellenlänge (151) von in das Probenvolumen (13) eingestrahltem Licht (15) und einer zweiten Wellenlänge (153) von aus dem Probenvolumen (13) aufgesammelten Licht (15) liegt und wobei
- im ersten Mikroskopiemodus (155) die erste Wellenlänge (151) und die zweite Wellenlänge (151) des Lichts (15) gemeinsam im ersten spektralen Bereich (145) oder im zweiten spektralen Bereich (147) liegen.

7. Mikroskop (1) nach einem der Ansprüche 4 bis 6, wobei die Umschaltvorrichtung (159) wenigstens ein Element aus der Liste der Elemente, umfassend
- eine wellenlängenveränderliche Lichtquelle (84);
- eine Lichtquelle (84) mit wenigstens zwei unabhängig voneinander schaltbaren, sich unterscheidenden Emissionswellenlängen;
- ein wellenlängenveränderndes optisches Element (85) zur Variation der Wellenlänge des eingestrahlten Lichts (15);
- ein optisches Verzögerungselement zur Variation der Polarisation des eingestrahlten Lichts; und
- ein Strahlengangselektor-Wechselmodul (157) zum wechselweisen oder unabhängigen Einbringen wenigstens zweier Strahlengangselektoren (25) in den Mikroskopstrahlengang (9),
umfasst.

8. Mikroskop (1) nach Anspruch 7 oder 8, wobei das Mikroskop (1) mindestens eine Lichtquelle (47) umfasst, die Licht (15) in mindestens zwei unterschiedlichen Wellenlängenbereichen emittiert, wobei das Licht der mindestens einen Lichtquelle (45) der mindestens zwei unterschiedlichen Wellenlängenbereiche (151,153) unabhängig voneinander in den Mikroskopstrahlengang (9) einkoppelbar ist und wobei wenigstens zwei der unterschiedlichen Wellenlängenbereiche (151,153) der Lichtquelle (47) in unterschiedlichen spektralen Bereichen (145,147) des wellenlängenselektiven optischen Elements (39) liegen.

9. Mikroskop (1) nach einem der Ansprüche 1 bis 8, wobei der Mikroskopstrahlengang zu einer senkrecht auf der hinteren Brennebene (95) der ersten (17) und/oder zweiten optischen Anordnung (21) stehenden Normalen verkippt in das optische Modul (11) einspeisbar ist, und dass die zweite optische Anordnung (21) und/oder das Vorsatzelement (27) in Abhängigkeit der Verkippung des Mikroskopstrahlenganges (9) zur Normalen der hinteren Brennebene (95) der zweiten optischen Anordnung (21) verkippbar ist.

10. Mikroskop (1) nach einem der Ansprüche 7 bis 9, wobei ein
- Stoppfilter (35) zum Abschwächen oder Blockieren eines reflektierten Anteils (123) des zweiten spektralen Bereichs (153), der vom wellenlängenselektiven optischen Element (39) im Wesentlichen zur zweiten optischen Anordnung (21) transmittiert wird und/oder
- eine weitere optische Anordnung (105) zur Verlagerung der hinteren Brennebene (95) der ersten optischen Anordnung (17)
im ersten Strahlengang (19) vorgesehen ist.

11. Mikroskop (1) nach einem der Ansprüche 1 bis 10, mit einem weiteren Abbildungsstrahlengang (172), welcher ein weiteres Mikroskopobjektiv (174) und einen weiteren Detektor aufweist, wobei mit dem Objektiv (174) des weiteren Abbildungsstrahlengangs (172) das Probenvolumen (13) von einer Seite aus auf den weiteren Detektor abbildbar ist, welche dem optischen Modul (11) abgewandt ist.

12. Mikroskop (1) nach Anspruch 11, wobei der weitere Abbildungsstrahlengang (172) relativ zum optischen Modul (11) bewegbar ist oder wobei die erste optische Anordnung (17) relativ zur zweiten optischen Anordnung (21) bewegbar ist.

13. Mikroskop (1) nach einem der Ansprüche 1 bis 12, wobei die optische Achse (178) des Mikroskopstrahlengangs (9) und die optische Achse (180) der ersten optischen Anordnung (17) und/oder die optische Achse (182) der zweiten optischen Anordnung (21) und/oder die optische Achse (184) des gegebenenfalls weiteren Abbildungsstrahlengangs (172) ein gemeinsames Objektfeld schneiden.

14. Optisches Modul zur Beleuchtung eines Probenvolumens (13) und zum Aufsammeln und Weiterleiten von Licht (15) aus dem Probenvolumen (13), welches an eine mechanische Aufnahmevorrichtung (7) eines Mikroskops (1) für Mikroskopobjektive adaptierbar ist, wobei durch die Aufnahmevorrichtung (7) hindurch sich ein Mikroskopstrahlengang (9) erstreckt, wobei das optische Modul (11) aufweist:
- eine erste optische Anordnung (17) mit einem ersten Strahlengang (19);
- eine zweite optische Anordnung (21) mit einem zweiten, den ersten Strahlengang (19) im Probenvolumen (13) schneidenden Strahlengang (23), wobei die zweite optische Anordnung (21) als Lichtblattmodul (43) zur Erzeugung eines das Probenvolumen (13) durchquerenden Lichtblattes (45) ausgestaltet ist;
- eine Einkoppelstelle (162) für - vorzugsweise mittels einer Lichtleitfaser (168) transportiertem - Beleuchtungslicht zum Beleuchten eines Teils des Probenvolumens (13) über den ersten Strahlengang (19) und/oder den zweiten Strahlengang (23); und
- ein Vorsatzelement (27) zwischen der ersten optischen Anordnung (17) und/oder der zweiten optischen Anordnung (21) und dem Probenvolumen (13), wobei der erste Strahlengang (19) oder der zweite Strahlengang (23) zumindest abschnittsweise durch das Vorsatzelement (27) verläuft,
wobei das Mikroskop (1) einen Flächensensor zur Detektion von aus dem Probenvolumen (13) aufgesammeltem Licht (15) umfasst.

15. Verfahren zur Betrachtung eines Probenvolumens (13) mittels eines - vorzugsweise nach einem der Ansprüche 1 bis 14 ausgebildeten - Mikroskops (1), insbesondere eines zum Lichtblattmikroskop (3) umgebauten Konfokalmikroskops (4), umfassend die folgenden Verfahrensschritte:
- Beleuchten des Probenvolumens (13) durch ein an einem Mikroskopkorpus (5) angebrachtes optisches Modul (11) hindurch entlang eines ersten Strahlenganges (19) oder entlang eines zweiten, den ersten Strahlengang schneidenden Strahlenganges (23), wobei die zweite optische Anordnung (21) als Lichtblattmodul (43) zur Erzeugung eines das Probenvolumen (13) durchquerenden Lichtblattes (45) ausgestaltet ist;
- Aufsammeln und Weiterleiten von vom Probenvolumen (13) ausgesandtem Licht (15) durch das optische Modul (11) hindurch entlang des ersten Strahlenganges (19);
- Hindurchleiten des ersten (19) oder zweiten Strahlenganges (1) durch ein zwischen einer ersten (17) und/oder zweiten optischen Anordnung (21) und dem Probenvolumen (13) angeordnetes Vorsatzelement (27); und
- Detektieren von aus dem Probenvolumen (13) aufgesammeltem Licht (15) mit einem Flächensensor.

16. Verfahren nach Anspruch 15, wobei ferner das Umschalten zwischen einem ersten Mikroskopiemodus (155) und einem Lichtblattmodus (149) durchgeführt wird, wobei
- im ersten Mikroskopiemodus (155) das Probenvolumen (13) entlang des ersten Strahlenganges (19) beleuchtet wird und
- im Lichtblattmodus (149) das Probenvolumen (13) entlang des zweiten Strahlenganges (23) beleuchtet wird.

17. Verfahren nach Anspruch 16, wobei das Umschalten wenigstens einen Verfahrensschritt aus der Liste der folgenden Verfahrensschritte umfasst:
- Auswechseln eines optischen Strahlengangselektors (120), der den ersten Strahlengang (19) und/oder den zweiten Strahlengang (23) mit einem Mikroskopstrahlengang (9) zusammenführt;
- Verändern der Wellenlänge von eingestrahltem Beleuchtungslicht mittels einer wellenlängenveränderlichen Lichtquelle und/oder einem wellenlängenverändernden optischen Element; und
- Variieren der Polarisation des eingestrahlten Beleuchtungslichts (101) mittels eines optischen Verzögerungselements.

18. Verfahren nach Anspruch 17, wobei
- im Verfahren im Lichtblattmodus (149) ein interessierender Bereich des Probenvolumens (13) identifiziert wird;
- nach dem Umschalten in den ersten Mikroskopiemodus (150) der identifizierte interessierende Bereich mittels eines rasternden mikroskopischen Verfahrens mit, im Vergleich zum Lichtblattmodus (41), höherer Auflösung untersucht wird; und wobei
- durch den Flächensensor oder einen Punktdetektor erzeugte Bilddaten, die eine vom Probenvolumen (13) ausgesandte Lichtverteilung repräsentieren, fusioniert werden und/oder gemeinsam dargestellt werden.

19. Verfahren nach einem der Ansprüche 15 bis 18, wobei zeitgleich zum Beleuchten des Probenvolumens (13) Licht (15) welches sich vom Beleuchtungslicht (101) unterscheidet auf oder in eine im Probenvolumen (13) angeordnete Probe (69) eingestrahlt wird.

## Claims

1. Microscope (1), comprising a microscope body (5), a mechanical holding device (7) for microscope objectives, through which a microscope beam path (9) extends, and an optical module (11) attachable to the holding device (7) for illuminating a sample volume (13) and for collecting and transmitting light (15) from the sample volume (13), wherein the optical module (11) has:
- a first optical arrangement (17) with a first beam path (19);
- a second optical arrangement (21) with a second beam path (23) intersecting the first beam path (19) in the sample volume (13), wherein the second optical arrangement (21) is configured as a light sheet module (43) for generating a light sheet (45) traversing the sample volume (13);
- a coupling point (162) for illuminating light for illuminating a part of the sample volume (13) via the first beam path (19) and/or the second beam path (23); and
- an attachment element (27) between the first optical arrangement (17) and/or the second optical arrangement (21) and the sample volume (13), wherein the first beam path (19) or the second beam path (23) extends at least partially through the attachment element (27),
wherein the microscope (1) comprises an area sensor for detecting light (15) collected from the sample volume (13).

2. The microscope (1) according to claim 1, wherein the microscope (1) is a confocal microscope (4) converted into a light sheet microscope (3).

3. The microscope (1) according to claim 1 or 2, wherein an optical fiber (168) is provided which is configured to transport the illumination light to the coupling point.

4. The microscope (1) according to any one of claims 1 to 3, wherein the microscope (1) has a switching device (159) by means of which the microscope (1) can be reversibly and repeatedly switched to at least a first microscopy mode (155) from the following list of operating states:
- a scanning microscopic mode;
- a non-linear lighting mode;
- a confocal mode; and
- a light field mode;
or a light sheet mode (149).

5. The microscope (1) according to any one of claims 1 to 4, wherein the microscope has a beam path selector configured as a wavelength-selective optical element (39).

6. The microscope (1) according to claim 5, wherein the wavelength-selective optical element (39) has at least one spectral filter edge (143) which separates a first spectral range (145) from a second spectral range (147), wherein the wavelength-selective optical element (39) has different transmission and reflection properties (T, R) for the first spectral range (145) and for the second spectral range (147), wherein
- in the light sheet mode (149), the spectral filter edge (149) lies spectrally between a first wavelength (151) of light (15) radiated into the sample volume (13) and a second wavelength (153) of light (15) collected from the sample volume (13) and wherein
- in the first microscopy mode (155), the first wavelength (151) and the second wavelength (151) of the light (15) are together in the first spectral range (145) or in the second spectral range (147).

7. The microscope (1) according to any one of claims 4 to 6, wherein the switching device (159) comprises at least one element from the list of elements, comprising
- a wavelength-variable light source (84);
- a light source (84) having at least two independently switchable, differing emission wavelengths;
- a wavelength-changing optical element (85) for varying the wavelength of the incident light (15);
- an optical delay element for varying the polarization of the incident light; and
- a beam path selector exchange module (157) for alternately or independently introducing at least two beam path selectors (25) into the microscope beam path (9).

8. The microscope (1) according to claim 7 or 8, wherein the microscope (1) comprises at least one light source (47) which emits light (15) in at least two different wavelength ranges, wherein the light of the at least one light source (45) of the at least two different wavelength ranges (151, 153) can be coupled independently of one another into the microscope beam path (9), and wherein at least two of the different wavelength ranges (151, 153) of the light source (47) lie in different spectral ranges (145, 147) of the wavelength-selective optical element (39).

9. The microscope (1) according to any one of claims 1 to 8, wherein the microscope beam path can be fed into the optical module (11) tilted relative to a normal perpendicular to the rear focal plane (95) of the first (17) and/or second optical arrangement (21), and that the second optical arrangement (21) and/or the attachment element (27) can be tilted depending on the tilt of the microscope beam path (9) to the normal of the rear focal plane (95) of the second optical arrangement (21).

10. The microscope (1) according to any one of claims 7 to 9, wherein
- a stop filter (35) for attenuating or blocking a reflected portion (123) of the second spectral range (153) which is transmitted from the wavelength-selective optical element (39) essentially to the second optical arrangement (21) and/or
- a further optical arrangement (105) for displacing the rear focal plane (95) of the first optical arrangement (17)
is provided in the first beam path (19).

11. The microscope (1) according to any one of claims 1 to 10, with a further imaging beam path (172) which has a further microscope objective (174) and a further detector, wherein with the objective (174) of the further imaging beam path (172) the sample volume (13) can be imaged onto the further detector from a side which is facing away from the optical module (11).

12. The microscope (1) according to claim 11, wherein the further imaging beam path (172) is movable relative to the optical module (11) or wherein the first optical arrangement (17) is movable relative to the second optical arrangement (21).

13. The microscope (1) according to any one of claims 1 to 12, wherein the optical axis (178) of the microscope beam path (9) and the optical axis (180) of the first optical arrangement (17) and/or the optical axis (182) of the second optical arrangement (21) and/or the optical axis (184) of the optionally further imaging beam path (172) intersect a common object field.

14. Optical module for illuminating a sample volume (13) and for collecting and transmitting light (15) from the sample volume (13), which is adaptable to a mechanical holding device (7) of a microscope (1) for microscope objectives, wherein a microscope beam path (9) extends through the holding device (7), wherein the optical module (11) has:
- a first optical arrangement (17) with a first beam path (19);
- a second optical arrangement (21) with a second beam path (23) intersecting the first beam path (19) in the sample volume (13), wherein the second optical arrangement (21) is configured as a light sheet module (43) for generating a light sheet (45) traversing the sample volume (13);
- a coupling point (162) for illumination light, preferably transported by means of an optical fiber (168), for illuminating a part of the sample volume (13) via the first beam path (19) and/or the second beam path (23); and
- an attachment element (27) between the first optical arrangement (17) and/or the second optical arrangement (21) and the sample volume (13), wherein the first beam path (19) or the second beam path (23) extends at least partially through the attachment element (27),
wherein the microscope (1) comprises an area sensor for detecting light (15) collected from the sample volume (13).

15. Method for observing a sample volume (13) by means of a microscope (1) - preferably configured according to any one of claims 1 to 14 - in particular a confocal microscope (4) converted into a light sheet microscope (3), comprising the following method steps:
- illuminating the sample volume (13) through an optical module (11) attached to a microscope body (5) along a first beam path (19) or along a second beam path (23) intersecting the first beam path, wherein the second optical arrangement (21) is configured as a light sheet module (43) for generating a light sheet (45) traversing the sample volume (13);
- collecting and transmitting light (15) emitted by the sample volume (13) through the optical module (11) along the first beam path (19);
- passing the first (19) or second beam path (1) through an attachment element (27) arranged between a first (17) and/or second optical arrangement (21) and the sample volume (13); and
- detecting light (15) collected from the sample volume (13) with an area sensor.

16. The method according to claim 15, further comprising switching between a first microscopy mode (155) and a light sheet mode (149), wherein
- in the first microscopy mode (155) the sample volume (13) is illuminated along the first beam path (19) and
- in the light sheet mode (149) the sample volume (13) is illuminated along the second beam path (23).

17. The method according to claim 16, wherein the switching comprises at least one method step from the list of the following method steps:
- replacing an optical beam path selector (120) which combines the first beam path (19) and/or the second beam path (23) with a microscope beam path (9);
- changing the wavelength of incident illumination light by means of a wavelength-variable light source and/or a wavelength-variable optical element; and
- varying the polarization of the incident illumination light (101) by means of an optical delay element.

18. The method according to claim 17, wherein
- in the method in light sheet mode (149) a region of interest of the sample volume (13) is identified;
- after switching to the first microscopy mode (150), the identified region of interest is examined by means of a scanning microscopic method with a higher resolution than the light sheet mode (41); and wherein
- image data generated by the area sensor or a point detector, which represent a light distribution emitted by the sample volume (13), are fused and/or displayed together.

19. The method according to any one of claims 15 to 18, wherein at the same time as illuminating the sample volume (13), light (15) which differs from the illuminating light (101) is irradiated onto or into a sample (69) arranged in the sample volume (13).

## Revendications

1. Microscope (1) comprenant un corps (5) de microscope, un dispositif de réception (7) mécanique pour objectifs de microscope à travers lequel s'étend un trajet de rayonnement (9) de microscope, et un module optique (11) pouvant être monté sur le dispositif de réception (7) pour éclairer un volume (13) d'échantillon et pour collecter et transmettre de la lumière (15) à partir du volume (13) d'échantillon, dans lequel le module optique (11) présente :
- un premier agencement optique (17) avec un premier trajet de rayonnement (19) ;
- un deuxième agencement optique (21) avec un deuxième trajet de rayonnement (23) croisant le premier trajet de rayonnement (19) dans le volume (13) d'échantillon, dans lequel le deuxième agencement optique (21) est conçu en tant que module (43) de feuille de lumière pour générer une feuille de lumière (45) traversant le volume (13) d'échantillon ;
- un point d'injection (162) pour la lumière d'éclairage pour éclairer une partie du volume (13) d'échantillon via le premier trajet de rayonnement (19) et/ou le deuxième trajet de rayonnement (23) ; et
- un élément adaptateur (27) entre le premier agencement optique (17) et/ou le deuxième agencement optique (21) et le volume (13) d'échantillon, dans lequel le premier trajet de rayonnement (19) ou le deuxième trajet de rayonnement (23) passe au moins par sections à travers l'élément adaptateur (27),
dans lequel le microscope (1) comprend un capteur de surface pour détecter la lumière (15) collectée à partir du volume (13) d'échantillon.

2. Microscope (1) selon la revendication 1, dans lequel le microscope (1) est un microscope confocal (4) transformé en microscope à feuille de lumière (3).

3. Microscope (1) selon la revendication 1 ou la revendication 2, dans lequel une fibre optique (168), qui est conçue pour transporter la lumière d'éclairage vers le point d'injection, est prévue.

4. Microscope (1) selon l'une quelconque des revendications 1 à 3, dans lequel le microscope (1) présente un dispositif de basculement (159) au moyen duquel le microscope (1) peut basculer de manière réversible et répétée au moins dans un premier mode de microscopie (155) parmi la liste suivante d'états de fonctionnement :
- un mode microscope à balayage ;
- un mode d'éclairage non linéaire ;
- un mode confocal ; et
- un mode champ lumineux ;
ou un mode (149) feuille de lumière.

5. Microscope (1) selon l'une quelconque des revendications 1 à 4, dans lequel le microscope présente un sélecteur de trajet de rayonnement conçu comme un élément optique (39) sélectif en longueur d'onde.

6. Microscope (1) selon la revendication 5, dans lequel l'élément optique (39) sélectif en longueur d'onde présente au moins un bord de filtre spectral (143), lequel sépare une première plage spectrale (145) d'une deuxième plage spectrale (147), dans lequel l'élément optique (39) sélectif en longueur d'onde présente des propriétés de transmission et de réflexion (T, R) différentes pour la première plage spectrale (145) et pour la deuxième plage spectrale (147), dans lequel
- en mode (149) feuille de lumière, le bord de filtre spectral (149) se situe spectralement entre une première longueur d'onde (151) de lumière (15) rayonnée dans le volume (13) d'échantillon et une deuxième longueur d'onde (153) de lumière (15) collectée à partir du volume (13) d'échantillon et dans lequel
- dans le premier mode de microscopie (155), la première longueur d'onde (151) et la deuxième longueur d'onde (151) de la lumière (15) se situent ensemble dans la première plage spectrale (145) ou dans la deuxième plage spectrale (147).

7. Microscope (1) selon l'une quelconque des revendications 4 à 6, dans lequel le dispositif de basculement (159) comprend au moins un élément de la liste des éléments, comprenant
- une source lumineuse (84) à longueur d'onde variable ;
- une source lumineuse (84) avec au moins deux longueurs d'onde d'émission distinctes commutables indépendamment l'une de l'autre ;
- un élément optique (85) de variation de longueur d'onde pour varier la longueur d'onde de la lumière (15) rayonnée ;
- un élément de temporisation optique pour varier la polarisation de la lumière rayonnée ; et
- un module de changement (157) de trajet de rayonnement pour l'introduction alternée ou indépendante d'au moins deux sélecteurs (25) de trajet de rayonnement dans le trajet de rayonnement (9) de
microscope.

8. Microscope (1) selon la revendication 7 ou la revendication 8, dans lequel le microscope (1) comprend au moins une source (47) de lumière qui émet la lumière (15) dans au moins deux plages de longueurs d'onde différentes, dans lequel la lumière de l'au moins une source (45) de lumière
des au moins deux plages de longueurs d'onde (151, 153) différentes peut être injectée indépendamment l'une de l'autre dans le trajet de rayonnement (9) de microscope et dans lequel au moins deux des plages de longueurs d'onde (151, 153) différentes de la source (47) de lumière se situent dans des plages spectrales (145, 147) différentes de l'élément optique (39) sélectif en longueur d'onde.

9. Microscope (1) selon l'une quelconque des revendications 1 à 8, dans lequel le trajet de rayonnement de microscope peut être introduit dans le module optique (11) de manière inclinée par rapport à une normale perpendiculaire au plan focal arrière (95) du premier (17) et/ou deuxième agencement optique (21),
et que le deuxième agencement optique (21) et/ou l'élément adaptateur (27) est inclinable en fonction de l'inclinaison du trajet de rayonnement (9) de microscope par rapport à la normale du plan focal arrière (95) du deuxième agencement optique (21).

10. Microscope (1) selon l'une quelconque des revendications 7 à 9, dans lequel
- un filtre d'arrêt (35) pour atténuer ou bloquer une partie réfléchie (123) de la deuxième plage spectrale (153), qui est transmise par l'élément optique (39) sélectif en longueur d'onde sensiblement au deuxième agencement optique (21) et/ou
- un autre agencement optique (105) pour déplacer le plan focal arrière (95) du premier agencement optique (17)
est prévu dans le premier trajet de rayonnement (19).

11. Microscope (1) selon l'une quelconque des revendications 1 à 10, avec un autre trajet de rayonnement d'imagerie (172), lequel présente un autre objectif (174) de microscope et un autre détecteur, dans lequel avec l'objectif (174) de l'autre trajet de rayonnement d'imagerie (172), le volume (13) d'échantillon peut être représenté sur l'autre détecteur à partir d'un côté, lequel est opposé au module optique (11).

12. Microscope (1) selon la revendication 11, dans lequel l'autre trajet de rayonnement d'imagerie (172) est mobile par rapport au module optique (11) ou dans lequel le premier agencement optique (17) est mobile par rapport au deuxième agencement optique (21).

13. Microscope (1) selon l'une quelconque des revendications 1 à 12, dans lequel l'axe optique (178) du trajet de rayonnement (9) de microscope et l'axe optique (180) du premier agencement optique (17) et/ou l'axe optique (182) du deuxième agencement optique (21) et/ou l'axe optique (184) de l'autre trajet de rayonnement d'imagerie (172), le cas échéant, croisent un champ d'objet commun.

14. Module optique pour l'éclairage d'un volume (13) d'échantillon et pour la collecte et la transmission de lumière (15) à partir du volume (13) d'échantillon, lequel est adaptable à un dispositif de réception (7) mécanique d'un microscope (1) pour objectifs de microscope, dans lequel un trajet de rayonnement (9) de microscope s'étend à travers le dispositif de réception (7), dans lequel le module optique (11) présente :
- un premier agencement optique (17) avec un premier trajet de rayonnement (19) ;
- un deuxième agencement optique (21) avec un deuxième trajet de rayonnement (23) croisant le premier trajet de rayonnement (19) dans le volume (13) d'échantillon, dans lequel le deuxième agencement optique (21) est conçu en tant que module (43) de feuille de lumière pour générer une feuille de lumière (45) traversant le volume (13) d'échantillon ;
- un point d'injection (162) pour la lumière d'éclairage - de préférence transportée au moyen d'une fibre optique (168) - pour éclairer une partie du volume (13) d'échantillon via le premier trajet de rayonnement (19) et/ou le deuxième trajet de rayonnement (23) ; et
- un élément adaptateur (27) entre le premier agencement optique (17) et/ou le deuxième agencement optique (21) et le volume (13) d'échantillon, dans lequel le premier trajet de rayonnement (19) ou le deuxième trajet de rayonnement (23) passe au moins par sections à travers l'élément adaptateur (27),
dans lequel le microscope (1) comprend un capteur de surface pour détecter la lumière (15) collectée à partir du volume (13) d'échantillon.

15. Procédé d'observation d'un volume (13) d'échantillon au moyen d'un microscope (1) - de préférence réalisé selon l'une quelconque des revendications 1 à 14 -, en particulier d'un microscope confocal (4) transformé en microscope (3) à feuille de lumière, comprenant les étapes de procédé suivantes :
- l'éclairement du volume (13) d'échantillon par un module optique (11) monté sur un corps (5) de microscope le long d'un premier trajet de rayonnement (19) ou le long d'un deuxième trajet de rayonnement (23) croisant le premier trajet de rayonnement, dans lequel le deuxième agencement optique (21) est conçu en tant que module (43) de feuille de lumière pour générer une feuille de lumière (45) traversant le volume (13) d'échantillon ;
- la collecte et la transmission de lumière (15) émise par le volume (13) d'échantillon à travers le module optique (11) le long du premier trajet de rayonnement (19) ;
- le passage du premier (19) ou deuxième trajet de rayonnement (1) à travers un élément adaptateur (27) disposé entre un premier (17) et/ou deuxième agencement optique (21) et le volume (13) d'échantillon ; et
- la détection de la lumière (15) collectée à partir du volume (13) d'échantillon avec un capteur de surface.

16. Procédé selon la revendication 15, dans lequel en outre le basculement entre un premier mode de microscopie (155) et un mode (149) feuille de lumière est effectué, dans lequel
- dans le premier mode de microscopie (155), le volume (13) d'échantillon est éclairé le long du premier trajet de rayonnement (19) et
- en mode (149) feuille de lumière, le volume (13) d'échantillon est éclairé le long du deuxième trajet de rayonnement (23).

17. Procédé selon la revendication 16, dans lequel le basculement comprend au moins une étape de procédé dans la liste des étapes de procédé suivantes :
- l'échange d'un sélecteur (120) de trajet de rayonnement qui réunit le premier trajet de rayonnement (19) et/ou le deuxième trajet de rayonnement (23) avec un trajet de rayonnement (9) de microscope ;
- la modification de la longueur d'onde de la lumière d'éclairage rayonnée au moyen d'une source de lumière à longueur d'onde variable et/ou d'un élément optique à longueur d'onde variable ; et
- la variation de la polarisation de la lumière d'éclairage (101) rayonnée au moyen d'un élément de temporisation optique.

18. Procédé selon la revendication 17, dans lequel
- une zone d'intérêt du volume (13) d'échantillon est identifiée dans le procédé dans le mode (149) feuille de lumière ;
- après le basculement dans le premier mode de microscopie (150), la zone d'intérêt identifiée est examinée à l'aide d'un procédé microscopique à trame avec une résolution plus élevée en comparaison du mode (41) feuille de lumière ; et dans lequel
- des données d'image générées par le capteur de surface ou un détecteur de point, qui représentent une répartition de lumière émise par le volume (13) d'échantillon, sont fusionnées et/ou représentées ensemble.

19. Procédé selon l'une quelconque des revendications 15 à 18, dans lequel, simultanément à l'éclairage du volume (13) d'échantillon, une lumière (15), laquelle se différencie de la lumière d'éclairage (101), est rayonnée sur ou dans un échantillon (69) disposé dans le volume (13) d'échantillon.
